# EUROPÄISCHE PATENTSCHRIFT

(11) **EP 3 601 798 B1**
(45) Veröffentlichungstag und Bekanntmachung des Hinweises auf die Patenterteilung: **26.05.2021**
(21) Anmeldenummer: 18716549.3
(22) Anmeldetag: 27.03.2018
(51) Int. Cl.: F04B 39/08, F04B 39/10, F04B 7/00, F16K 3/08, F16K 3/10, F16K 15/06, F16K 15/18

(54) **VENTILVERSCHLUSS FÜR EIN KOLBENKOMPRESSORVENTIL UND VERFAHREN ZUM BETRIEB DES VENTILVERSCHLUSSES**
VALVE CLOSURE FOR A PISTON COMPRESSOR VALVE AND METHOD OF OPERATING THE VALVE CLOSURE
OBTURATEUR POUR UNE SOUPAPE DE COMPRESSEUR À PISTON ET PROCÉDÉ DE FONCTIONNEMENT DE L'OBTURATEUR DE SOUPAPE

(30) Priorität: 27.03.2017 EP 17163178
(43) Veröffentlichungstag der Anmeldung: 05.02.2020
(73) Patentinhaber: Burckhardt Compression AG, 8404 Winterthur (CH)
(72) Erfinder: VOSER, Alexandre, 8352 Elsau (CH)
(74) Vertreter: Hepp Wenger Ryffel AG
(86) Internationale Anmeldenummer: PCT/EP2018/057840
(87) Internationale Veröffentlichungsnummer: WO 2018/178118

(56) Entgegenhaltungen:
- DE-T2- 60 103 509
- DE-T5-112014 005 019
- US-A- 2 553 645
- US-A1- 2001 001 477
- US-A1- 2010 247 359
- US-A1- 2013 220 424

## Beschreibung

Die Erfindung betrifft einen Ventilverschluss für ein Kolbenkompressorventil gemäss dem Oberbegriff von Anspruch 1. Die Erfindung betrifft weiter ein Verfahren zum Betrieb eines Ventilverschlusses gemäss dem Oberbegriff von Anspruch 16.

### Stand der Technik

Das Dokument WO 01/59266A1 offenbart ein Ventil für einen Kolbenkompressor. Dieses Ventil umfasst einen Ventilsitz sowie ein drehbares Schliesselement, wobei das Schliesselement in Abhängigkeit von dessen Drehstellung im Ventilsitz angeordnete Durchlassöffnungen öffnet oder schliesst. Dieses bekannte Ventil weist die Nachteile auf, dass ein relativ grosser Verschleiss auftritt, dass ein Öffnen und Schliessen des Ventils relativ lange dauert, und dass sich die Dichtfunktion des Ventils auf Grund des auftretenden Verschleisses mit der Zeit reduziert. Das Dokument DE 60103509T2 offenbart ein weiteres Ventil umfassend einen Ventilsitz sowie umfassend eine drehbare Haltevorrichtung, in welcher Schliesselement individuell beweglich und federnd gelagert sind.

### Darstellung der Erfindung

Aufgabe der Erfindung ist es einen vorteilhafteren Ventilverschluss für ein Kolbenkompressorventil zu bilden.

Diese Aufgabe wird gelöst mit einem Ventilverschluss umfassend die Merkmale von Anspruch 1. Die abhängigen Ansprüche 2 bis 15 betreffen weitere, vorteilhafte Ausgestaltungen. Die Aufgabe wird weiter gelöst mit einem Verfahren zum Betrieb eines Ventilverschlusses umfassend die Merkmale von Anspruch 16. Die abhängigen Ansprüche 17 bis 19 betreffen weitere, vorteilhafte Verfahrensschritte.

Die Aufgabe wird gelöst mit einem Ventilverschluss für ein Kolbenkompressorventil, umfassend einen Ventilsitz mit einer Mehrzahl von Durchlassöffnungen, umfassend eine Welle mit Drehachse, sowie umfassend ein um die Drehachse der Welle drehbares Schliesselement zum Öffnen und Schliessen der Durchlassöffnungen, wobei der Ventilsitz eine ebene Stirnseite umfasst, in welche die Durchlassöffnungen münden, wobei der Ventilsitz ein Zentrum aufweist, und wobei die Durchlassöffnungen radial zum Zentrum verlaufen, wobei die Drehachse senkrecht zur Stirnseite sowie durch das Zentrum verläuft, wobei das Schliesselement einteilig ausgestaltet ist, wobei das Schliesselement fest mit der Welle verbunden ist, wobei das Schliesselement einen Mittelpunkt aufweist sowie eine Mehrzahl von radial zum Mittelpunkt verlaufende Schliessarme, wobei die Welle derart im Ventilsitz gelagert ist, dass die Welle sowohl um die Drehachse drehbar als auch in Verlaufsrichtung der Drehachse verschiebbar angeordnet ist, wobei jeder Schliessarm eine zur Stirnseite hin ausgerichtete Dichtfläche aufweist, und wobei die Schliessarme im Wesentlichen komplementär zu den Durchlassöffnungen ausgebildet sind, um in Abhängigkeit der Drehung des Schliesselements die Durchlassöffnungen mit den Dichtflächen zu schliessen oder zu öffnen.

Die Aufgabe wird weiter gelöst mit einem Verfahren zum Betrieb eines Ventilverschlusses eines Kolbenkompressorventils, wobei der Ventilverschluss einen Ventilsitz mit einer Mehrzahl von Durchlassöffnungen, ein Schliesselement sowie eine Welle mit einer Drehachse umfasst, wobei das Schiesselement zum Öffnen und Schliessen der Durchlassöffnungen um die Drehachse gedreht wird, wobei das Schliesselement einteilig ausgestaltet ist und mit der Welle fest verbunden ist, wobei die Welle sowohl um die Drehachse drehbar als auch in Richtung der Drehachse verschiebbar im Ventilsitz gelagert ist, wobei das Schliesselement auf Grund eines am Kolbenkompressorventil anliegenden Fluiddrucks selbsttätig in Richtung der Drehachse angehoben wird, und wobei das Schliesselement nach dem Abheben vom Ventilsitz durch die Welle aktiv angetrieben gedreht wird und somit die Durchlassöffnungen vollständig geöffnet werden.

Beim erfindungsgemässen Ventilverschluss, wird zum Öffnen des Ventilverschlusses in einem ersten Verfahrensschritt das Schliesselement vom Ventilsitz angehoben, und wird das Schliesselement nach dem Abheben in einem zweiten Verfahrensschritt in eine Offenstellung gedreht wird.

Das erfindungsgemässe Kolbenkompressorventil weist den Vorteil auf, dass dessen Schliesselement, bei entsprechend anliegender Druckdifferenz, sich selbsttätig vom Ventilsitz abhebt, sodass das Schliesselement vorteilhafterweise erst dann betätigt beziehungsweise durch aktiv einwirkende Mittel gedreht wird, um das Durchlassöffnungen vollständig zu öffnen, wenn dieses vom Ventilsitz abgehoben ist. Dadurch unterliegt das Schliesselement beim Öffnen keiner oder einer sehr geringen Reibung, was einerseits eine geringe Abnutzung des Schliesselementes und des Ventilsitzes zur Folge hat, und was andererseits ermöglicht das Schliesselement mit geringer Kraft und insbesondere sehr schnell zu drehen, um dadurch das Kolbenkompressorventil vollständig zu öffnen. Vorteilhafterweise wird das Kolbenkompressorventil zudem derart vollständig geschlossen, dass das Schliesselement bezüglich dem Ventilsitz im abgehobenen Zustand von einer Offenstellung in eine Schliessstellung gedreht wird, bei welcher die Durchlassöffnungen in Verlaufsrichtung der Drehachse betrachtet durch das Schliesselement vollständig bedeckt werden, und anschliessend, oder gleichzeitig oder geringfügig zeitverschoben das Schliesselement selbsttätig durch die anliegende Druckdifferenz zum Ventilsitz hin bewegt wird, bis das Schliesselement am Ventilsitz anliegt und die Durchlassöffnungen vollständig bedeckt, sodass das Kolbenkompressorventil wieder vollständig geschlossen ist, sodass auch das Schliessen des Kolbenkompressorventils durch das Schliesselement sehr schnell und ohne oder mit geringer Reibung erfolgen kann.

Das Schliesselement ist in Verlaufsrichtung der Drehachse derart leichtgängig beweglich im Kolbenkompressorventil angeordnet, dass das Schliesselement durch die am Kolbenkompressorventil zwischen dem Bereich des Einlasses und dem Bereich des Auslasses anliegende Druckdifferenz beziehungsweise die am Schliesselement anliegende Druckdifferenz selbsttätig in Verlaufsrichtung der Drehachse bewegt bzw. verschoben wird.

Vorteilhafterweise umfasst das Kolbenkompressorventil eine erste Teildrehachse bzw. eine erste Teilwelle, eine zweite Teildrehachse bzw. eine zweite Teilwelle sowie eine Kupplung, welche zwischen der ersten und der zweiten Teildrehachse angeordnet ist, sodass die erste und die zweite Teildrehachse in Verlaufsrichtung der Drehachse auf Grund der Kupplung gegenseitig beweglich bzw. gegenseitig verschiebbar sind. Vorzugsweise ist der Stellantrieb mit der ersten Teildrehachse verbunden und ist das Schliesselement mit der zweiten Teildrehachse fest verbunden. Besonders vorteilhaft ist die Kupplung bezüglich einer Drehung um die Drehachse verdrehstabil ausgestaltet, sodass das Schliesselement beim Drehen um die Drehachse im Wesentlichen oder genau der Drehung des Stellantriebs folgt. Die Kupplung ist in Verlaufsrichtung der Drehachse derart leichtgängig beweglich ausgestaltet, dass eine am Schliesselement anliegende Druckdifferenz dieses selbsttätig in Verlaufsrichtung der Drehachse bewegt bzw. verschiebt. Dadurch ist einerseits eine Bewegung des Schliesselementes in Verlaufsrichtung der Drehachse gewährleistet, und ist andererseits gewährleistet, dass das Schliesselement über die Drehachse vorzugsweise starr mit dem Stellantrieb verbunden ist, welcher die Drehachse antreibt, was wiederum ein sehr schnelles Öffnen und Schliessen des Schliesselementes ermöglicht.

Als Zustandsgrösse zum Erfassen des Zustandes des Kolbenkompressorventils, insbesondere zum Erfassen der Lage des Schliesselementes bezüglich des Ventilsitzes, sind eine Mehrzahl von Grössen geeignet, so beispielsweise eine Bewegung, beispielsweise die Distanz des Schliesselements in Verlaufsrichtung der Drehachse, vorzugsweise die Distanz zwischen Schliesselement und Stirnseite des Ventilsitzes, oder beispielsweise eine direkte gegenseitige Berührung von Schliesselement und Ventilsitz, oder ein Anschlagen des Schliesselements oder der Drehachse bei vollständig angehobenem Schliesselement, oder beispielsweise die Druckdifferenz beidseitig des Kolbenkompressorventilverschlusses. Eine Ansteuerungsvorrichtung überwacht die Zustandsgrösse, vergleicht diese vorzugsweise mit einem Referenzwert, und öffnet beziehungsweise schliesst das Schliesselement durch ein entsprechendes Drehen des Schliesselementes bzw. durch ein Aktivieren eines die Drehachse drehenden Stellantriebes, wenn eine vorgegebene Bedingung erfüllt ist. Das erfindungsgemässe Kolbenkompressorventil ist daher präzise, schnell und wiederholbar identisch schaltbar.

Die erfindungsgemässe Vorrichtung beziehungsweise das erfindungsgemässe Verfahren weist den Vorteil auf, dass das Abheben des Schliesselementes vom Ventilsitz äusserst genau bestimmbar ist, einerseits weil das Schliesselement selbsttätig in Verlaufsrichtung der Drehachse beweglich ist, und andererseits weil besonders bevorzugt die Bewegung des Schliesselements bzw. die Distanz zwischen Schliesselement und Ventilsitz in Verlaufsrichtung der Drehachse gemessen wird. Somit kann das Abheben des Schliesselements beziehungsweise der Zeitpunkt des Abhebens vom Ventilsitz genau erfasst werden, und anschliessend sofort der Stellantrieb aktiviert werden, um das Schliesselement in die Offenstellung zu drehen. Bevorzugt wird das Schliesselement nach dem Abheben vom Ventilsitz durch den Stellantrieb innerhalb einer Zeitspanne von zumindest 2 Millisekunden bis maximal 10 Millisekunden von der Schliessstellung in die Offenstellung gedreht. Durch das schnelle Öffnen ist sichergestellt, dass das durchströmende Fluid einen geringen Strömungswiderstand erfährt. Beim Schliessen wird das Schliesselement vorzugsweise durch den Stellantrieb innerhalb einer Zeitspanne von zumindest 2 Millisekunden bis maximal 10 Millisekunden von der Offenstellung in die Schliessstellung gedreht, und das Schliesselement gleichzeitig oder nach erfolgtem Drehen selbsttätig zum Ventilsitz abgesenkt, bis das Schliesselement am Ventilsitz anliegt.

In einer vorteilhaften Ausgestaltung ist das Schliesselement über eine Torsionsfeder mit dem Stellantrieb verbunden, wobei in der Torsionsfeder ein Teil der Bewegungsenergie gespeichert ist, sodass das Schliesselement besonders schnell schaltbar ist.

Der Ventilverschluss des Kolbenkompressorventils, umfassend den Ventilsitz und das Schliesselement, ist vorzugsweise derart ausgestaltet, dass der Ventilsitz ein Zentrum aufweist und in Umfangsrichtung beabstandet angeordnet eine Mehrzahl von radial zum Zentrum verlaufenden Durchlassöffnungen aufweist, und dass das Schliesselement eine Mehrzahl von radialen Armen sowie eine Drehachse aufweist, wobei die Arme radial zur Drehachse verlaufen, und wobei jeder Durchlassöffnung ein Schliessarm zugeordnet ist, welcher derart breit ausgestaltet ist, dass dieser die Durchlassöffnung in einer Geschlossenstellung vollständig bedecken kann, und in einer Offenstellung möglichst gering oder gar nicht bedeckt. Die Schliessarme sind derart ausgestaltet, dass diese zur Peripherie hin eine abnehmende Querschnittsfläche aufweisen, und dadurch zur Peripherie hin eine sich reduzierende Masse aufweisen, indem die Schliessarme zur Peripherie hin beispielsweise dünner ausgestaltet sind. Ein Schliesselement umfassend derartige Schliessarme weist zur Peripherie hin eine besonders geringe Masse auf, und weist daher eine reduzierte Massenträgheit auf, weshalb geringe Kräfte erforderlich sind um das Schliesselement zu betätigen, das heisst zu beschleunigen und abzubremsen, um das Schliesselement zwischen einer Schliessstellung und einer Offenstellung hin und her zu schalten. Die reduzierte Massenträgheit weist den zusätzlichen Vorteil auf, dass geringere Kräfte erforderlich sind um das Schliesselement in Verlaufsrichtung der Drehachse zu beschleunigen, beziehungsweise dass sich das Schliesselement schneller beziehungsweise in kürzerer Zeit in Verlaufsrichtung der Drehachse bewegen lässt. Besonders bevorzugt ist das Schliesselement aus einem Kunststoff gefertigt, und umfasst vorzugsweise eine Faserverstärkung, vorzugsweise Kohlefasern, damit das Schliesselement eine geringe Masse aufweist.

Das Schliesselement umfassend eine Mehrzahl von radialen Armen weist zudem den Vorteil auf, dass die Arme an deren Peripherie nicht gegenseitig miteinander verbunden sind, sodass sich jeder Schliessarm individuell auf die Durchlassöffnung legen kann, sodass jeder Schliessarm allfällig vorhandene Unregelmässigkeiten oder Abnutzungen an der Durchlassöffnung oder am Schliessarm besser korrigieren kann, indem sich jeder Schliessarm individuell am Ventilsitz anlegen kann. Die zur Peripherie hin abnehmende Querschnittfläche hat vorzugsweise zur Folgen, dass der Schliessarm zudem zur Peripherie hin eine reduzierte Biegesteifigkeit aufweist, was den Vorteil ergibt, dass sich der Schliessarm besonders leicht dem Verlauf des Ventilsitzes anpassen kann, wenn der Schliessarm die Durchlassöffnung bedeckt, was eine besonders vorteilhafte Abdichtung zur Folge hat.

In einer vorteilhaften Ausgestaltung umfasst der Ventilverschluss für ein Kolbenkompressorventil einen Ventilsitz mit einer Mehrzahl von Durchlassöffnungen, eine Welle mit einer Drehachse, sowie ein um die Drehachse der Welle drehbares Schliesselement zum Öffnen und Schliessen der Durchlassöffnungen, wobei das Schliesselement fest mit der Welle verbunden ist, wobei der Ventilsitz eine ebene Stirnseite umfasst, in welche die Durchlassöffnungen münden, wobei der Ventilsitz ein Zentrum aufweist, und wobei die Durchlassöffnungen radial zum Zentrum verlaufen, wobei das Schliesselement einen Mittelpunkt aufweist sowie eine Mehrzahl von radial zum Mittelpunkt verlaufende Schliessarme, wobei die Welle derart im Ventilsitz gelagert ist, dass die Welle sowohl um die Drehachse drehbar als auch in Verlaufsrichtung der Drehachse verschiebbar angeordnet ist, wobei die Drehachse senkrecht zur Stirnseite sowie durch das Zentrum verläuft, wobei jeder Schliessarm eine zur Stirnseite hin ausgerichtete Dichtfläche aufweist, und wobei die Schliessarme im Wesentlichen komplementär zu den Durchlassöffnungen ausgebildet sind, um in Abhängigkeit der Drehung des Schliesselements die Durchlassöffnungen mit den Dichtflächen zu schliessen oder zu öffnen.

Vorzugsweise ist die Welle derart in Längsrichtung der Drehachse verschiebbar ausgestaltet ist, dass das Schliesselement bei entsprechend anliegender Druckdifferenz in Längsrichtung selbsttätig verschiebbar ist, und insbesondere selbsttätig vom Ventilsitz abhebbar ist.

Vorzugsweise sind die Schliessarme derart ausgestaltet, dass diese zu deren Peripherie hin eine abnehmende Querschnittsfläche aufweisen.

Bei einem vorteilhaften Verfahren zum Betrieb eines Ventilverschlusses eines Kolbenkompressorventils, umfasst der Ventilverschluss einen Ventilsitz mit einer Mehrzahl von Durchlassöffnungen, eine Welle mit einer Drehachse, sowie ein mit der Welle fest verbundenes Schliesselement, wobei die Welle um die Drehachse drehbar und in Richtung der Drehachse verschiebbar im Ventilsitz gelagert ist, wobei das Schiesselement zum Öffnen und Schliessen der Durchlassöffnungen um die Drehachse gedreht wird, wobei das Schliesselement auf Grund eines am Kolbenkompressorventil anliegenden Fluiddrucks selbsttätig in Richtung der Drehachse angehoben wird, und wobei das Schliesselement nach dem Abheben vom Ventilsitz durch die Welle aktiv angetrieben gedreht wird und somit die Durchlassöffnungen vollständig geöffnet werden.

In einem vorteilhaften Verfahren wird zum Öffnen des Ventilverschlusses in einem ersten Verfahrensschritt das Schliesselement vom Ventilsitz angehoben, und wird das Schliesselement nach dem Abheben in einem zweiten Verfahrensschritt in eine Offenstellung gedreht.

In einem vorteilhaften Verfahren wird die Lage des Schliesselements bezüglich des Ventilsitzes gemessen, und wird das Schliesselement erst nach erfolgtem Abheben vom Ventilsitz um die Drehachse gedreht.

In einem vorteilhaften Verfahren wird das Schliesselement innerhalb eines Zeitraums von 2 Millisekunden bis 10 Millisekunden nach dem Abheben vom Ventilsitz in die Offenstellung gedreht.

### Kurze Beschreibung der Zeichnungen

Die zur Erläuterung der Ausführungsbeispiele verwendeten Zeichnungen zeigen:
- Fig. 1: einen Längsschnitt durch ein Ventil mit Antrieb, mit anliegendem Schliesselement;
- Fig. 2: einen Längsschnitt durch das Ventil gemäss Figur 1 mit abgehobenem Schliesselement;
- Fig. 3: eine perspektivische Ansicht eines Ventilsitzes;
- Fig. 4: eine perspektivische Ansicht eines Schliesselements, das zum Ventilsitz gemäss Fig. 3 passt;
- Fig. 5: einen Längsschnitt durch das Schliesselement und den Ventilsitz gemäss Fig. 6 entlang der Schnittlinie A-A;
- Fig. 6: eine perspektivische Ansicht von Schliesselement und Ventilsitz, mit abgehobenem Schliesselement;
- Fig. 7: eine perspektivische Ansicht der Anordnung gemäss Fig. 6 mit dem Schliesselement in Offenstellung;
- Fig. 8: einen Längsschnitt durch ein Druckventil mit abgehobenem Schliesselement;
- Fig. 9: einen Längsschnitt durch ein weiteres Ausführungsbeispiel eines Saugventils mit abgehobenem Schliesselement;
- Fig. 10: einen Längsschnitt durch eine Kupplungsvorrichtung;
- Fig. 11: einen Längsschnitt durch ein weiteres Ausführungsbeispiel einer Kupplung;
- Fig. 12: einen Längsschnitt durch eine Balgfeder;
- Fig. 13: eine perspektivische Ansicht eines weiteren Ausführungsbeispiels eines Schliesselements;
- Fig. 14: eine perspektivische Ansicht einer weiteren Ausführungsform eines Ventilsitzes;
- Fig. 15: eine perspektivische Ansicht des dem Ventilsitz gemäss Figur 14 zugehörigen Schliesselements;
- Fig. 16: eine Detailansicht eines Schnitts entlang der Schnittlinie B des Ventils gemäss Fig. 14 in geschlossenem Zustand;
- Fig. 17: die Ansicht gemäss Figur 16 bei abgehobenem Schliesselement;
- Fig. 18: die Ansicht gemäss Figur 16 bei abgehobenem und leicht verdrehtem Schliesselement;
- Fig. 19: eine perspektivische Ansicht eines weiteren Ausführungsbeispiels eines Ventilsitzes;
- Fig. 20: eine perspektivische Ansicht eines Ausschnittes eines weiteren Ausführungsbeispiels eines Schliesselements;
- Fig. 21: eine Seitenansicht eines radialen Schliessteils gemäss Figur 20 aus Blickrichtung G-G;
- Fig. 22: einen Schnitt durch das Schliessteil gemäss Figur 21 entlang der Schnittlinie F-F;
- Fig. 23: einen Schnitt durch das Schliessteil gemäss Figur 21 entlang der Schnittlinie E-E;
- Fig. 24: eine Seitenansicht eines weiteren Ausführungsbeispiels eines radialen Schliessteils aus Blickrichtung G-G;
- Fig. 25: einen Schnitt durch das Schliessteil gemäss Figur 24 entlang der Schnittlinie H-H;
- Fig. 26: einen Schnitt durch das Schliessteil gemäss Figur 24 entlang der Schnittlinie I-I;
- Fig. 27: einen Längsschnitt durch ein weiteres Ausführungsbeispiel einer Kupplungsvorrichtung;
- Fig. 28: einen Querschnitt durch die Kupplungsvorrichtung gemäss Fig. 23 entlang der Schnittlinie C-C;
- Fig. 29: eine Detailansicht eines elektromagnetischen Antriebs;
- Fig. 30: den elektromagnetischen Antrieb gemäss Fig. 29 mit dem Anker in einer zweiten Grundstellung;
- Fig. 31: ein weiteres Ausführungsbeispiel des elektromagnetischen Antriebs.

Grundsätzlich sind in den Zeichnungen gleiche Teile mit gleichen Bezugszeichen versehen.

### Wege zur Ausführung der Erfindung

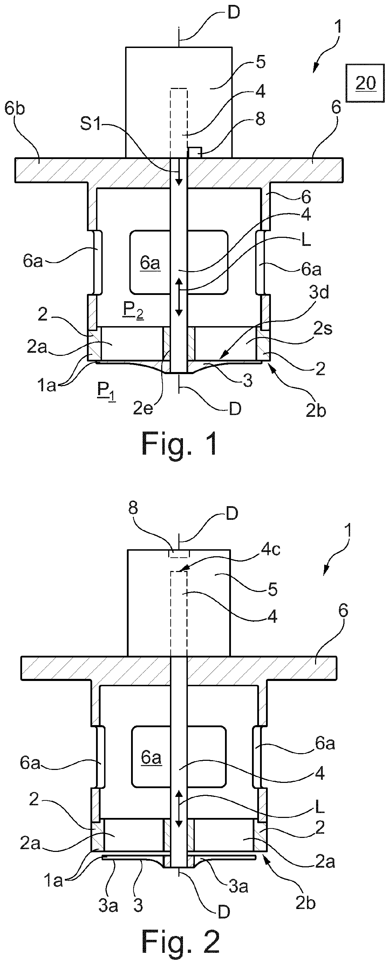

Figur 1 zeigt ein aktiv gesteuertes Kolbenkompressorventil 1, umfassend einen Ventilsitz 2 mit einer Mehrzahl von Durchlassöffnungen 2a, umfassend ein um eine Drehachse D drehbares Schliesselement 3 zum Öffnen und Schliessen der Durchlassöffnungen 2a, sowie umfassend einen Stellantrieb 5 zum Drehen des Schliesselements 3. Der Ventilsitz 2 weist eine Stirnseite 2b auf, in welche die Durchlassöffnungen 2a münden, wobei das Schliesselement 3 in Verlaufsrichtung L der Drehachse D beweglich mit dem Stellantrieb 5 verbunden ist, sodass das Schliesselement 3 sowohl um die Drehachse D drehbar als auch in Verlaufsrichtung L der Drehachse D bezüglich der Stirnseite 2b verschiebbar ist. Die Welle 4 ist in einer Bohrung 2e des Ventilsitzes 2 beziehungsweise in einem axialen Führungslager gelagert. Das Ventil 1 ist in einer Laterne 6 umfassend Durchlassöffnungen 6a und eine Abdeckung 6b angeordnet. Das Schliesselement 3 ist in einer abgesenkten Geschlossenstellung dargestellt, sodass das Schliesselement 3 an der Stirnseite 2b des Ventilsitzes 2 anliegt und die Durchgangsöffnungen 2a durch das Schliesselement 3 vollständig verschlossen sind. Das in Figur 1 dargestellte Ventil 1 umfasst zudem einen Sensor 8 zum Erfassen einer Zustandsgrösse E des Schliesselements 3 oder des Ventils 1. Der dargestellte Sensor 8 erfasst beispielsweise die Bewegung der Welle 4 in Verlaufsrichtung L, beispielsweise den Hubweg der Welle 4. Eine Ansteuervorrichtung 20 erfasst den von Sensor 8 gemessenen Wert und steuert zudem den Stellantrieb 5 an. Durch ein Ansteuern der Ansteuervorrichtung 20 wird das Schliesselement 3 in Drehrichtung der Drehachse D gedreht, vorzugsweise von einer Geschlossenstellung in eine Offenstellung oder umgekehrt. In einer vorteilhaften Ausgestaltung aktiviert die Ansteuervorrichtung 20 den Stellantrieb 5 sobald die Zustandsgrösse E von einem vorgegebenen Sollwert abweicht. Als Zustandsgrösse E eignet sich beispielsweise der Abstand zwischen einer Dichtfläche 3d des Schliesselements 3 und der Stirnseite 2b des Ventilsitzes 2, oder ein Verschiebeweg der Welle 4 in Verlaufsrichtung L, oder eine Druckdifferenz ΔP = P2 - P1, das heisst die Differenz zwischen dem Drucks P2 auf der einen Seite des Schliesselementes 3 und dem Druck P1 auf der anderen Seite des Schliesselementes 3. Zur Messung der beiden Drücke P1, P2 sind zumindest zwei Sensoren 8 erforderlich. Die Welle 4 ist auf eine nicht im Detail dargestellte Weise derart mit dem Antrieb 5 verbunden, dass die Welle 4 einerseits vom Antrieb 5 bezüglich einer Rotation um die Drehachse D angetrieben ist, und dass die Welle 4 andererseits bezüglich dem Antrieb 5 in Längsrichtung L verschiebbar ist. Besonders vorteilhaft wird das Schliesselement 3 in Verlaufsrichtung L selbsttätig verschoben, indem die am Schliesselement 3 anliegende Druckdifferenz zur Folge hat, dass sich das Schliesselement in Verlaufsrichtung L verschiebt, und sich dabei entweder vom Ventilsitz 2 abhebt, oder sich dem Ventilsitz 2 annähert und letztendlich an der Stirnseite 2b des Ventilsitzes 2 anliegt. In dieser bevorzugten Ausführungsform ist das Schliesselement 3 derart leichtgängig gelagert, dass sich das Schliesselement in Verlaufsrichtung L selbsttätig auf Grund der anliegenden Druckdifferenz verschieben kann. In einer weiteren möglichen Ausgestaltung könne auch ein nicht dargestellter Antrieb vorgesehen sein, welcher die Bewegung des Schliesselementes 3 in Verlaufsrichtung L zumindest teilweise unterstützt.

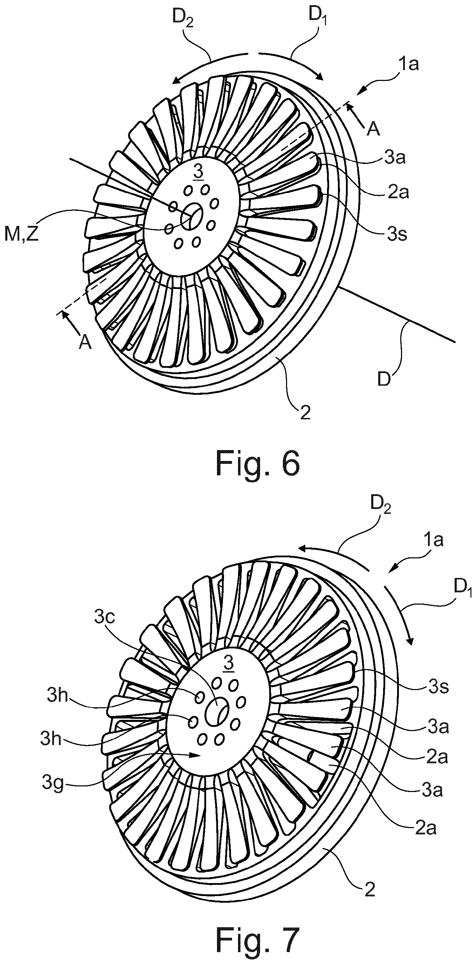

Figur 2 zeigt das Ventil gemäss Figur 1 mit einem Schliesselement 3 in einer angehobenen Offenstellung, in welcher das Schliesselement 3 in Längsrichtung L bezüglich der Stirnseite 2b angehoben ist. Vorteilhafterweise wird das Schliesselement 3 in angehobener Offenstellung, gegenüber der in Figur 1 dargestellten Geschlossenstellung, durch den Stellantrieb 5 zudem derart um die Drehachse D gedreht, dass das Schliesselement 3 die Durchlassöffnungen 2a wie in Figur 2 und Figur 7 dargestellt nicht mehr bedeckt, und der Ventilverschluss 1a, umfassend den Ventilsitz 2 und das Schliesselement 3, somit in Längsrichtung L Fluid durchlässig ist. Im Unterschied zu dem in Figur 1 dargestellten Sensor 8 misst der in Figur 2 dargestellte Sensor 8 die Distanz zur Stirnseite 4c der Welle 4. Das Schliesselement 3 ist fest mit der Drehachse D bzw. der Welle 4 verbunden, sodass das Schliesselement 3 einem Drehen um die Drehachse D unmittelbar folgt, und dass die Drehachse D bzw. die Welle 4 einer Bewegung des Schliesselementes 3 in Längsrichtung L unmittelbar folgt.

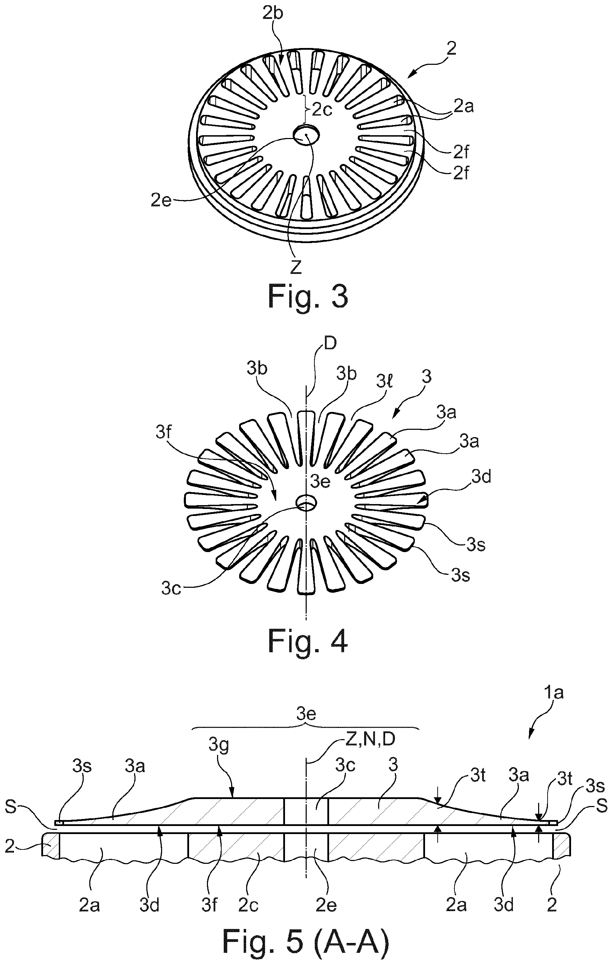

Figur 3 zeigt in einer perspektivischen Ansicht ein erstes Ausführungsbeispiel eines Ventilsitzes 2 aufweisend eine Mittenbohrung 2e beziehungsweise ein Zentrum Z, und aufweisend eine Vielzahl von radial zur Mittenbohrung 2e verlaufende Durchlassöffnungen 2a mit dazwischen verlaufenden Stegen 2f. Zudem weist der Ventilsitz 2 eine Stirnseite 2b auf, in welche alle Durchlassöffnungen 2a münden, wobei die Stirnseite 2b in einer vorteilhaften Ausgestaltung zudem noch eine ringförmige Auflagefläche 2c aufweist. Der dargestellte Ventilsitz 2 weist fünfundzwanzig Durchlassöffnungen 2a auf, welche in Umfangsrichtung gleichmässig verteilt beziehungsweise gegenseitig identisch beabstandet angeordnet sind, wobei in einer beispielhaften Ausführungsform jede Durchlassöffnung 2a eine Breite von einem Umfangswinkel von 7° aufweist, und wobei jeder Steg 2f eine Breite von einem Umfangswinkel von 7.4° aufweist. Um das Schliesselement von einer Offenstellung in eine Geschlossenstellung bzw. eine Schliessstellung zu drehen, oder umgekehrt, muss dieses somit um einen Drehwinkel von 7,2° gedreht werden. Vorteilhafterweise umfasst der Ventilsitz 2 zumindest zwanzig in Umfangsrichtung beabstandet angeordnet Durchlassöffnungen 2a und eine entsprechende gleiche Anzahl gegengleich angeordnete, in Umfangsrichtung beabstandete Schliessarme 3a zum Öffnen und Schliessen der Durchlassöffnungen 2a. Diese Ausgestaltung von zumindest zwanzig Durchlassöffnungen 2a und radialen Armen 3a weist den Vorteil auf, dass der erforderliche maximale Drehwinkel des Schliesselementes relativ klein ist, und bei diesem Ausführungsbeispiel 360° dividiert durch 20 (Anzahl Durchlassöffnungen) dividiert durch 2 (der halbe Winkel muss gedreht werden) und somit 9° beträgt.

Figur 4 zeigt eine perspektivische Ansicht eines zum Ventilsitz 2 gemäss Figur 3 passenden Schliesselementes 3. Das Schliesselement 3 umfasst eine Nabe 3e mit einer Zentralbohrung 3c, und umfasst eine Vielzahl von radial zur Zentralbohrung 3c beziehungsweise zu einer Drehachse D verlaufende Schliessarme 3a, welche durch Zwischenräume 3b voneinander getrennt sind, und welche sich bis zur Peripherie 3s erstrecken. In einer beispielhaften Ausführungsform weist jeder Zwischenraum 3b eine Breite von einem Umfangswinkel von 7° aufweist, und weist jeder Schliessarm 3a eine Breite von einem Umfangswinkel von 7.4° auf, sodass die Schliessarme 3a geringfügig breiter ausgestaltet sind als die Durchlassöffnungen 2a, sodass die Durchlassöffnungen 2a bei einer entsprechenden Stellung des Schliesselementes 3 durch die Schliessarme 3a vollständig abdeckbar sind. Das Schliesselement 3 ist vorzugsweise einstückig bzw. einteilig, das heisst aus einem Teil bestehend ausgestaltet, und ist vorteilhafterweise aus einem Kunststoff gefertigt, beispielsweise aus einem faserverstärktem Kunststoff, insbesondere einem kohlenstofffaserverstärktem Kunststoff (KFK). Ein KFK ist ein Verbundwerkstoff, bei dem Kohlenstofffasern in eine KunststoffMatrix, meist Epoxidharz, eingebettet sind. Der Matrix-Werkstoff dient zur Verbindung der Fasern sowie zum Füllen der Zwischenräume. Es sind auch andere Duroplaste oder auch Thermoplaste als Matrixwerkstoff geeignet. Das Schliesselement kann jedoch auch aus einem Kunststoff ohne Beigabe von Fasern hergestellt werden.

Die Figuren 6 und 7 zeigen den eigentlichen Ventilverschluss 1a umfassend das Schliesselement 3 sowie den Ventilsitz 2 in zwei möglichen gegenseitigen Stellungen. Zudem zeigt Figur 5 einen Schnitt durch das Schliesselement 3 und angedeutet durch den Ventilsitz 2 entlang der in Figur 6 dargestellten Schnittlinie A-A. Der Ventilverschluss 1a, das heisst das Schliesselement 3 und der Ventilsitz 2, können im Wesentlichen vier unterschiedliche gegenseitige Stellungen einnehmen, nämlich eine abgesenkte Geschlossenstellung, eine angehobene Geschlossenstellung, eine angehobene Offenstellung und eine abgesenkte Offenstellung. Angehoben bedeutet, dass das Schliesselement 3 bezüglich dem Ventilsitz 2 angehoben und somit bezüglich diesem beabstandet ist, wie in den Figuren 2 und 5 bis 7 dargestellt. Abgesenkt bedeutet, dass das Schliesselement 3 am Ventilsitz 2 anliegt, wie in Figur 1 dargestellt. Nur in der in Figur 1 dargestellten, abgesenkten Geschlossenstellung ist das Ventil 1 bzw. der Ventilverschluss 1a vollständig geschlossen, indem das Schliesselement 3 am Ventilsitz 2 anliegt und die Durchlassöffnungen 2a durch das anliegende Schliesselement 3 beziehungsweise dessen Schliessarme 3a vollständig geschlossen sind. Bei der in den Figuren 5 und 6 dargestellten, angehobenen Geschlossenstellung ist das Schliesselement 3 bezüglich dem Ventilsitz 2 beabstandet, wobei das Schliesselement 3 beziehungsweise dessen Schliessarme 3a die Durchlassöffnungen 2a beabstandet abdecken, sodass zwischen dem Schliesselement 3 und den Ventilsitz 2 nur ein kleiner Spalt S besteht, durch welchen ein ein- oder ausströmendes Fluid fliessen könnte. Bei der in Figur 7 dargestellten, angehobenen Offenstellung ist das Schliesselement 3 bezüglich dem Ventilsitz 2 beabstandet, wobei das Schliesselement 3, im Vergleich zur Stellung gemäss Figur 6, in Drehrichtung D1 gedreht wurde, sodass die Durchlassöffnungen 2a in Längsrichtung L beziehungsweise in Verlaufsrichtung der Drehachse D durch das Schliesselement 3 beziehungsweise dessen Schliessarme 3a nicht mehr bedeckt sind oder sich allenfalls nur noch minimal am Rand überschneiden, sodass eine grösst mögliche Fläche der Durchlassöffnungen 2a in Längsrichtung L für ein durchströmendes Fluid offen ist, und das durch den vollständig offenen Ventilverschluss 1a strömende Fluid durch das Schliesselement 3 bzw. dessen radial verlaufenden Schliessarme 3a nicht oder vernachlässigbar gering behindert wird. Falls das in Figur 7 dargestellte Schliesselement 3 abgesenkt würde, sodass dieses am Ventilsitz 2 anliegen würde, so würde das Schliesselement 3 eine abgesenkte Offenstellung einnehmen, bei welcher die Durchlassöffnungen 2a maximal offen sind, vorzugsweise vollständig offen, zumindest jedoch maximal offen, wobei die maximale Öffnungsfläche durch die Breite in Umfangsrichtung eines jeweiligen Schliessarms 3a und die Breite in Umfangsrichtung einer jeweiligen Durchlassöffnung 2a bestimmt wird. Das Schliesselement 3 wird durch den Stellantrieb 5 durch ein Drehen in Drehrichtung D1 geöffnet und somit in eine Offenstellung gebracht, und wird durch ein Drehen in Drehrichtung D2 geschlossen und somit in eine Schliessstellung gebracht. Zudem bewegt sich das Schliesselement 3 auf Grund der am Schliesselement 3 angreifenden Kräfte, insbesondere der Druckdifferenz des Fluides, selbsttätig in Längsrichtung L, sodass das Schliesselement 3 in dieser Richtung bezüglich dem Ventilsitz 2 angehoben oder abgesenkt wird. Wie in Figur 6 dargestellt verläuft die Drehachse D durch den Mittelpunkt M des Schliesselementes 3 beziehungsweise durch das Zentrum Z des Ventilsitzes 2. Figur 7 zeigt zudem, dass das Schliesselement 3 eine Befestigungsseite 3g aufweist, in welcher Befestigungslöcher 3h angeordnet sind, die zur Befestigung des Schliesselementes 3 an der Welle 4 dienen.

Figur 5 zeigt einen Schnitt entlang der Schnittlinie A-A gemäss Figur 6. Das Schliesselement 3 ist bezüglich des Ventilsitzes 2 angehoben. Das Schliesselement 3 umfasst eine Nabe 3e mit einem Mittelpunkt M, wobei die Nabe 3e eine Zentralbohrung 3c, eine ebenen Gleitfläche 3f und eine Befestigungsseite 3g umfasst. Die Schliessarme 3a verjüngen sich in radialer Richtung nach aussen, und weisen daher zur Peripherie 3s hin eine abnehmende Querschnittfläche auf. Die Verjüngung ergibt den Vorteil, dass sich die Masse der Schliessarme 3a gegen Aussen reduziert, was das Gewicht und die Massenträgheit des Schliesselementes 3 reduziert. Im Ausführungsbeispiel gemäss Figur 5 reduziert sich die Höhe 3t der Schliessarme 3a zur Peripherie 3s hin. Der Schliessarm 3a weist in Umfangsrichtung D eine konstante Höhe 3t auf, das heisst der Schliessarm 3a weist über dessen gesamte Breite dieselbe Höhe 3t auf.

In einem beispielhaften Verfahren kann das in den Figuren 1 und 2 dargestellte Kolbenkompressorventil 1 derart betrieben werden, dass eine Zustandsgrösse E des Schliesselements 3 gemessen wird, beispielsweise der Verschiebeweg S1 der Welle 4 in Längsrichtung L, wobei das Schliesselement 3 wie in Fig. 1 dargestellt vorerst in der abgesenkten Geschlossenstellung angeordnet ist, wobei die Welle 4 in Längsrichtung L selbsttätig beweglich ist, und wobei das Schliesselement 3 abhängig vom Druck eines auf das Ventil 1 beziehungsweise auf das Schliesselement 3 einwirkenden Arbeitsgases vom Ventilsitz 2 abgehoben werden kann. Die Zustandsgrösse E wird erfasst und der Antrieb 5 wird aktiviert sobald die Zustandsgrösse E einen vorgegebenen Sollwert überschreitet, sodass das Schliesselement 3 über den Antrieb 5 durch ein Drehen um die Drehachse D in die in Figur 2 dargestellte angehobene Offenstellung gedreht wird, wobei das Drehen durch den Antrieb 5 erfolgt, und das Anheben in Längsrichtung L selbsttätig erfolgt. Als Zustandsgrösse E wird beispielsweise ein Wegsignal des Sensors 8 verwendet, indem die Verschiebung der Welle 4 in Richtung der Längsachse L gemessen wird, wobei diese Verschiebung vorzugsweise dem Abstand zwischen dem Schliesselement 3 und der Stirnseite 2b entspricht. Sobald die Zustandsgrösse E einen vorgegebenen Sollwert übersteigt, beispielsweise 0,1 mm, wird der Antrieb 5 betätigt und das Schliesselement 3 in die in Figur 2 oder Figur 7 dargestellte Offenstellung gedreht.

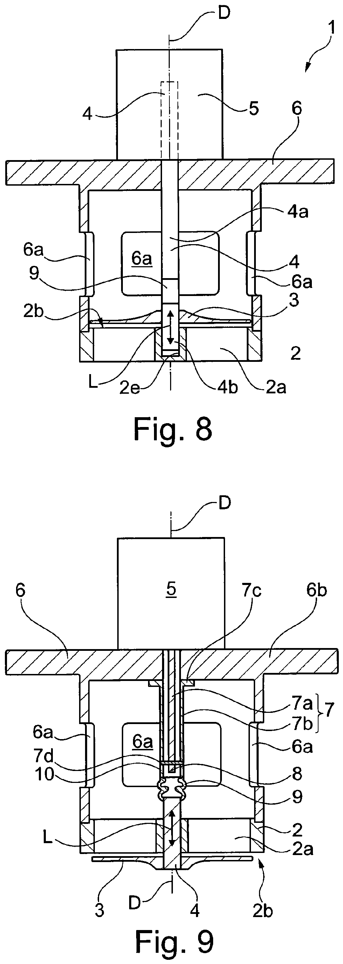

Figur 8 zeigt ein als Druckventil ausgestaltetes Ventil 1, wobei sich das Schliesselement 3 in einer angehobenen Geschlossenstellung befindet. Das Schliesselement 3 ist zwischen dem Ventilsitz 2 und dem Antrieb 5 angeordnet. Im Gegensatz dazu ist in Figur 2 der Ventilsitz 2 zwischen dem Schliesselement 3 und dem Antrieb 5 angeordnet. Das Ventil gemäss Figur 8 umfasst ein erstes Wellenteil 4a bzw. eine erste Teildrehachse, und ein zweites Wellenteil 4b bzw. eine zweite Teildrehachse, welche über eine Kupplung 9 miteinander verbunden sind. Das erste Wellenteil 4a ist in Längsrichtung L nicht beweglich, wogegen die Kupplung 9 eine Bewegung in Längsrichtung L zulässt, sodass das zweite Wellenteil 4b in Längsrichtung L beweglich ist. Im Ausführungsbeispiel gemäss Figur 8 ist die Bohrung 2e bzw. das axiale Führungslager als Sackloch ausgestaltet, in welcher das zweite Wellenteil 4b radial und axial geführt ist. Ansonsten wurden die Komponenten Ventilsitz 2, Schliesselement 3, Antrieb 5 und Laterne 6 bereits im Zusammenhang mit den Figuren 1 und 2 beschrieben. In einer weiteren Ausführungsform könnte auf das zweite Wellenteil 4b verzichtet werden, indem das Schliesselement 3 direkt mit der Kupplung 9 verbunden ist. Die Kupplung 9 ist vorzugsweise derart in Längsrichtung L elastisch oder federnd ausgestaltet, dass sich die Schliesselemente 3 auf Grund der angreifenden Strömungskräfte selbsttätig in Längsrichtung L bewegen können,

Figur 9 zeigt ein weiteres, als Saugventil ausgestaltetes Ventil 1. Im Unterschied zu dem Ventil 1 gemäss Figur 2 weist das Ventil 1 gemäss Figur 9 eine Torsionsfeder 7 auf, welche eine innere Torsionsfeder 7a sowie einen äusseren Torsionshohlstab 7b umfasst. Die innere Torsionsfeder 7a ist an deren einem Ende mit dem Antrieb 5 verbunden, und ist an deren anderem Ende mit einem Hohlstabende 7d des äusseren Torsionshohlstabs 7b verbunden. Der Torsionshohlstab 7b ist am einen Ende über eine Befestigung 7c mit der Abdeckung 6b verbunden ist, und ist am andern Ende mit dem Hohlstabende 7d verbunden. Das Hohlstabende 7d ist mit einem hohlzylinderförmigen Verbindungsteil 10 verbunden, in welchem ein Sensor 8 angeordnet ist. Das Verbindungsteil 10 ist über eine Kupplung 9 mit der Welle 4 verbunden. Die Kupplung 9 ist derart ausgestaltet, dass die Kupplung deren Länge in Längsrichtung L verändern kann. Vorzugsweise ist die Kupplung in Längsrichtung L elastisch ausgestaltet, vorzugsweise federelastisch. Die Welle 4 ist somit durch die Kupplung 9 bezüglich dem Verbindungsteil 10 beziehungsweise der Torsionsfeder 7 in Längsrichtung L beweglich beziehungsweise in Längsrichtung L verschiebbar angeordnet. Die Torsionsfeder 7 ist in Längsrichtung L nicht beweglich ausgestaltet. Der Antrieb 5 bewirkt ein Verdrehen der inneren Torsionsfeder 7a und über das Hohlstabende 7d zudem ein Verdrehen des äusseren Torsionshohlstabs 7b. Zudem wird durch ein Drehen des Hohlstabende 7d das Verbindungteil 10 und die Kupplung 9 und dadurch die Welle 4 gedreht. Die Kupplung 9 ist derart ausgebildet, dass diese in Längsrichtung L eine Längenveränderung zulässt, und vorzugsweise eine Federwirkung aufweist, und insbesondere elastische Eigenschaften aufweist. Vorzugsweise weist die Kupplung 9 bezüglich einer Drehung um die Drehachse D möglichst starre Eigenschaften auf, sodass das Schliesselement 3 und die Welle 4 über die Kupplung 9 drehfest mit dem Verbindungsteil 10 und dem Hohlstabende 7d verbunden sind. Die Druckschrift WO2009/050215 A2 offenbart ein mögliches Verfahren zum Betrieb des Ventils im Detail. Der Inhalt dieser Druckschrift wird hiermit in die vorliegende Patentanmeldung aufgenommen.

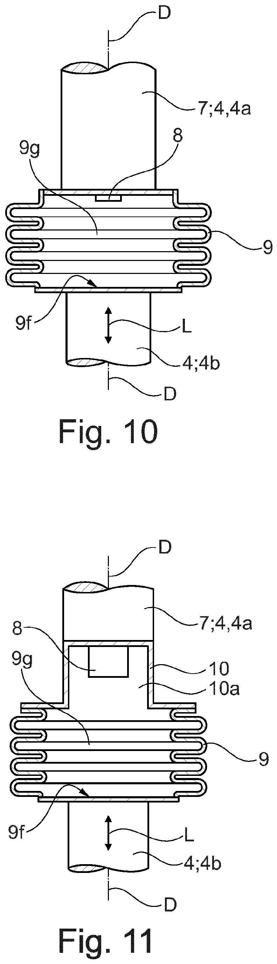

Figur 10 zeigt einen Längsschnitt durch ein weiteres Ausführungsbeispiel einer Verbindung zwischen Torsionsfeder 7 und Welle 4, wobei die Verbindung aus einem Kupplungsteil 9 besteht, das in Längsrichtung L beweglich, und insbesondere federelastisch ist. Das Kupplungsteil 9 ist bezüglich einer Drehung um die Drehachse D vorzugsweise möglichst steif, vorzugsweise verdrehstabil ausgestaltet. Das in Figur 10 dargestellte Kupplungsteil 9 ist als Balgfeder ausgestaltet. Vorzugsweise besteht die Balgfeder 9 aus Metall, um bei einer Drehung um die Drehachse D eine hohe Torsionssteifigkeit zu erzielen. Die Balgfeder 9 ist derart ausgestaltet, dass diese in Längsrichtung L elastische Eigenschaften aufweist, wobei die elastischen Eigenschaften beispielsweise durch die Wandstärke der Balgfeder, das gewählte Material, vorzugsweise Metall, sowie die geometrische Struktur der Balgfeder bestimmbar ist. In einer vorteilhaften Ausgestaltung ist im Innenraum 9g ein Sensor 8 angeordnet, welcher eine Distanz in Längsrichtung L misst, beispielsweise die Distanz zu einer gegenüberliegend angeordneten Stirnseite 9f der Balgfeder 9. In einer besonders vorteilhaften Ausgestaltung bilden das Kupplungsteil 9 einen gegen aussen gasdicht verschlossenen Innenraum 9g aus, sodass sich im Innenraum 9g keine von Aussen stammende Verschmutzung ablagern kann, sodass der Sensor 8 die Distanz zur Stirnseite 9f langfristig zuverlässig sowie wartungsarm messen kann. Die in Figur 11 dargestellte Kupplung 9 kann beispielsweise auch in einem Ventil 1 wie in den Figuren 1, 2 oder 8 dargestellt verwendet werden, indem die durchgehende Welle 4 in ein erstes Wellenteil 4a und ein zweites Wellenteil 4b unterteilt wird, und diese beiden Wellenteil 4a, 4b mit einer Kupplung 9, wie mit Figur 10 beschrieben verbunden werden, sodass die in den Figuren 1, 2 oder 8 dargestellte Welle 4 auf Grund der an der Welle 4 angeordneten Kupplung 9 federnde Eigenschaften in Längsrichtung L aufweist.

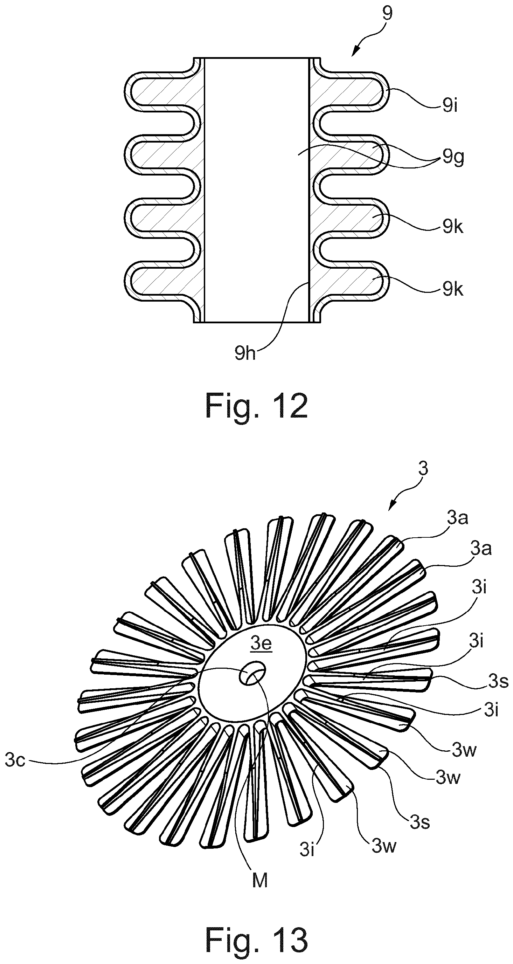

Figur 11 zeigt einen Längsschnitt durch ein weiteres Ausführungsbeispiel einer Verbindung zwischen Torsionsfeder 7 und Welle 4, wobei die Verbindung eine Kombination aus einem hohlzylinderförmigen Verbindungsteil 10 sowie einem Kupplungsteil 9 umfasst, wobei das Kupplungsteil 9 als Balgfeder ausgestaltet ist, wie in den Figuren 10 oder 12 beschrieben. In einer vorteilhaften Ausgestaltung ist im Verbindungsteil 10 ein Sensor 8 angeordnet, welcher beispielsweise die Distanz zu einer gegenüberliegend angeordneten Stirnseite 9f der Balgfeder 9 misst. In einer besonders vorteilhaften Ausgestaltung bilden das Verbindungsteil 10 sowie das als Balgfeder 9 ausgestaltete Kupplungsteil 9 einen gemeinsamen, gegen aussen gasdicht verschlossenen Innenraum 9g aus. Die in Figur 11 dargestellte Anordnung umfassend das Verbindungsteil 10 sowie die Balgfeder 9 kann beispielsweise auch in einem Ventil 1 wie in den Figuren 1, 2 oder 8 dargestellt verwendet werden. Als Sensor 8 ist beispielsweise ein Wirbelstromsensor geeignet.

Figur 12 zeigt ein weiteres Ausführungsbeispiel einer Kupplung 9 umfassend eine balgförmige, vorzugsweise metallische Aussenhülle 9i mit balgförmigen Ausbuchtungen 9k und einem Innenraum 9g, der teilweise mit einem elastischen, schraffiert dargestellten Füllmaterial gefüllt ist, sodass beispielsweise noch ein offener, zylinderförmiger Innenhohlraum 9h verbleibt. Das elastische Füllmaterial dient zum Bestimmen der Federkonstante beziehungsweise der Federelastizität der Kupplung 9 in Längsrichtung L, wobei diese Federkonstante insbesondere durch die Elastizität des Füllmaterials und/oder die Anordnung des Füllmaterials in den balgförmigen Ausbuchtungen 9k der Aussenhülle 9i bestimmt wird. Das elastische Füllmaterial besteht vorzugsweise aus einem elastischen Kunststoff. Das elastische Füllmaterial ist in Innenhohlraum 9h angeordnet, wobei vorzugsweise zumindest einige der balgförmigen Ausbuchtungen 9k, und vorzugsweise wie dargestellte alle Ausbuchtungen 9k vollständig mit dem elastischen Füllmaterial 9g gefüllt sind. Damit sich das Schliesselement 3 zuverlässig und selbsttätig in Längsrichtung L bewegen lässt benötigt die Kupplung einer Federkonstante, welche entsprechend der am Schliesselement 3 in Längsrichtung L angreifenden Kräfte angepasst ist. Die in den Figuren 10 bis 12 dargestellten Kupplungsteile 9 sind, je nach Erfordernis, in einer Vielzahl unterschiedlicher Federkonstanten herstellbar.

Die Figur 13 zeigt eine perspektivische Draufsicht eines weiteren Ausführungsbeispiels eines Schliesselementes 3. Die Unterseite des Schliesselementes 3 könnte wie in Figur 4 dargestellt ausgestaltet sein. Das Schliesselement 3 umfasst eine Nabe 3e mit einer Zentralbohrung 3c, einem Mittelpunkt M, sowie eine Mehrzahl radial zum Mittelpunkt M verlaufende, in Umfangsrichtung gegenseitig beabstandete Schliessteile 3a. Jeder radiale Arm 3a besteht aus einem plattenförmigen Teil 3w und einer damit fest verbunden Rippe 3i, wobei sich jedes plattenförmige Teile 3w in radialer Richtung bis zur Peripherie 3s erstreckt. Jede Rippe 3i steht auf der zur Durchlassöffnung 2a abgewandte Seite in Richtung der Drehachse D über das plattenförmige Teil 3w vor. Die Rippe 3i weist zur Peripherie 3s hin eine abnehmende Höhe 3t und dadurch eine abnehmende Querschnittsfläche auf. Die Biegesteifigkeit der Schliessteile 3a ist insbesondere abhängig von der Ausgestaltung der vorstehenden Rippe 3i. Vorteilhafterweise reduziert sich die Höhe 3t der Rippe 3i in radialer Richtung nach aussen, um die Masse der Rippe 3i gegen aussen zu reduzieren, und um somit insbesondere die Masse des Schliesselementes 3 radial gegen aussen zu reduzieren, um dadurch die Massenträgheit des Schliesselementes 3 insbesondere bezüglich einer Drehbewegung um die Drehachse D zu reduzieren.

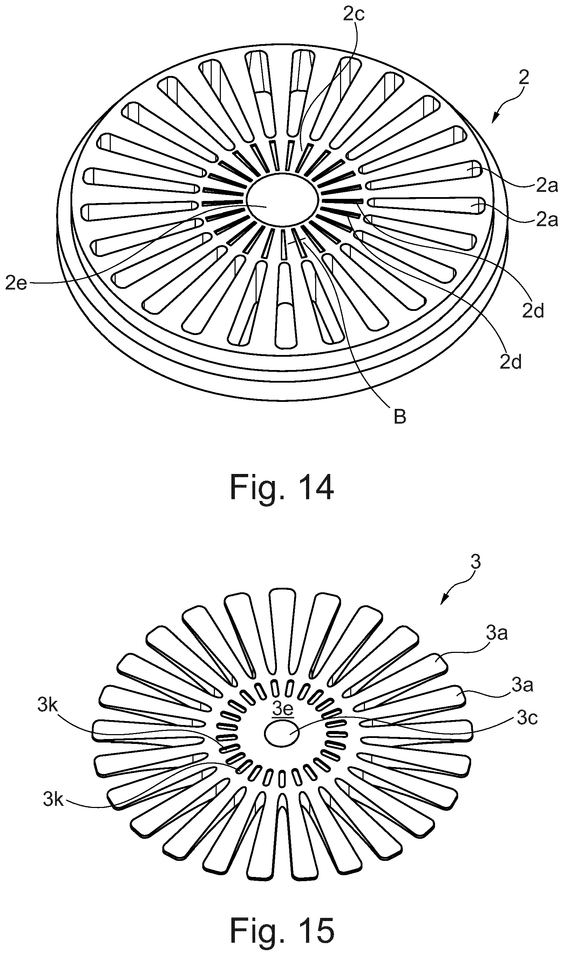

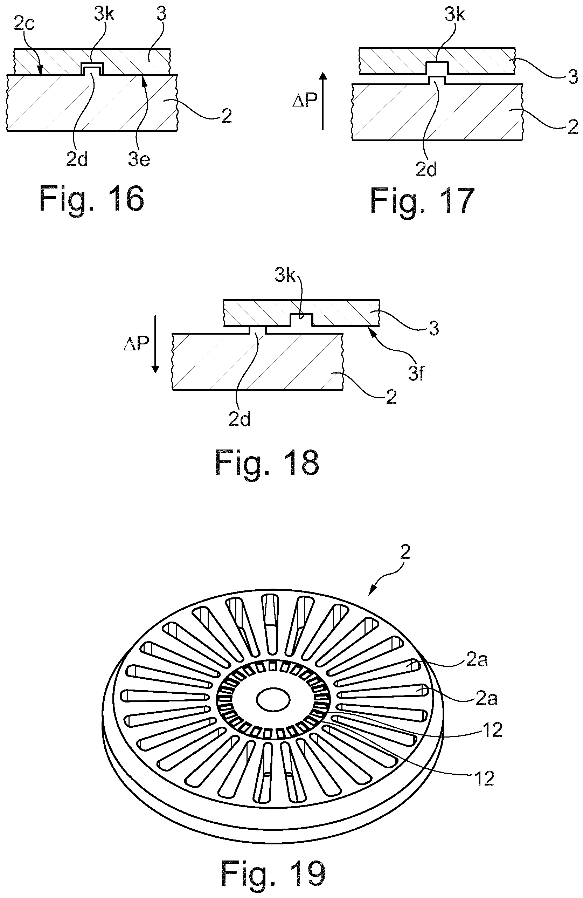

Figur 14 zeigt eine perspektivische Draufsicht einen Ventilsitzes 2, welcher im Unterschied zu der in Figur 3 dargestellten Ausführungsform an der Ringfläche 2c in Richtung der Drehachse D vorstehende Stützelemente 2d aufweist, welche in Umfangsrichtung gegenseitig beabstandet sind, vorzugsweise gegenseitig regelmässig beabstandet sind, und welche bezüglich der Bohrung 2e radial verlaufen. Die Figur 15 zeigt eine perspektivische Sicht eines Schliesselementes 3, welches im Unterschied zu der in Figur 4 dargestellten Ausführungsform in der Oberfläche der Nabe 3e Vertiefungen 3k aufweist, die radial zur Zentralbohrung 3c verlaufen, und die gegengleich zu den Stützelementen 2d angeordnet sind. Der Ventilsitz 2 gemäss Figur 14 und das Schliesselement 3 gemäss Figur 15 sind derart gegenseitig angepasst ausgestaltet, dass dieselbe Anzahl vorstehende Stützelemente 2d und Vertiefungen 3k angeordnet sind, derart, dass für jedes Stützelemente 2d eine gegenüberliegende Vertiefung 3k vorgesehen ist, und das jeweilige Stützelement 2d in die gegenüberliegende Vertiefung 3k eingreifen kann. Die Figuren 16 bis 18 zeigen in einem Schnitt entlang der Schnittlinie B gemäss Figur 14 den Ventilsitz 2 und das Schliesselement 3 in verschiedenen Stellungen. In Figur 16 weist das Schliesselement 3 eine abgesenkte Geschlossenstellung auf, wobei das Schliesselement 3 am Ventilsitz 2 anliegt, und wobei jedes Stützelement 2d in die gegenüberliegend angeordnete Vertiefung 3k eingreift, wobei das vorstehende Stützelement 2d vollständig in der Vertiefung 3k Platz findet, sodass die Auflagefläche 2c flächig an der Nabe 3e anliegt. Bei Figur 17 liegt ein nach oben gerichtete positive Druckdifferenz ΔP am Schliesselement 3 an, was zur Folge hat, dass das Schliesselement 3 gegenüber Figur 16 in Längsrichtung L angehoben ist, sodass sich das Schliesselement 3 in einer angehobenen Geschlossenstellung befindet, bei welcher das Schliesselement 3 angehoben ist, jedoch gegenüber der Stellung gemäss Figur 16 noch nicht um die Drehachse D verdreht ist. Sobald sich das Schliesselement 3 in der in Figur 17 dargestellten Lage befindet kann das Schliesselement 3 um die Drehachse D gedreht werden. Figur 18 zeigt das Schliesselement 3 in einer angehobenen Stellung, bei welcher das Schliesselement 3 gegenüber Figur 16 in Längsrichtung L angehoben ist und das Schliesselement 3 in Drehrichtung der Drehachse D verdreht ist. Figur 18 zeigt eine Situation bei welcher eine nach unten gerichtete, negative Druckdifferenz ΔP am Schliesselement 3 anliegt, was zur Folge hat, dass das Schliesselement 3 sich in Richtung Ventilsitz 2 absenken möchte, was jedoch durch das Stützelement 2d verhindert wird, an welchem das Schliesselement 3 anliegt. Die am Schliesselement 3 anliegende Stirnfläche des Stützelementes 2d ist relativ klein, weist den Vorteil ergibt, dass die Drehkraft, welche erforderlich ist, um das Schliesselement 3 in Drehrichtung D2 der Drehachse D zu drehen relativ klein ist. Das Stützelement 2d weist somit den Vorteil auf, dass, im Vergleich zu einer Ausführungsform ohne Stützelement 2d, der Drehwiederstand zwischen Schliesselement 3 und Ventilsitz 2 reduziert wird, sodass das Schliesselement 3 auch dann noch zuverlässig gedreht werden kann, wenn, wie dargestellt, eine negative Druckdifferenz ΔP am Schliesselement 3 anliegt, welche das Schliesselement 3 gegen den Ventilsitz 2 drücken möchte. Das erfindungsgemässe Ventil 1 kann deshalb in einem grösseren Bereich von anliegenden Druckdifferenzen zuverlässig betrieben werden. Das Stützelement 2d weist den weiteren Vorteil auf, dass bei negativer Druckdifferenz ΔP zudem der Verschleiss von Schliesselement 3 und Ventilsitz 2 reduziert wird, falls diese bei negativer Druckdifferenz ΔP gegenseitig verdreht werden.

In einem weiteren Ausführungsbeispiel können beim Ventilsitz 2 an Stelle von Stützelementen 2d Vertiefungen angeordnet sein, und könnten gegengleich im Schliesselement 3 an Stelle von Vertiefungen 3k Stützelemente angeordnet sein.

Die Figur 19 zeigt ein weiteres Ausführungsbeispiel eines Ventilsitzes 2, welcher im Unterschied zu der in Figur 3 dargestellten Ausführungsform in der Ringfläche 2c eine Mehrzahl von in Umfangsrichtung beabstandete Rollkörper 12 aufweist. Diese Rollköper 12 stehen geringfügig, zum Beispiel 1/10 mm über die Ringfläche 2c vor. Die Rollkörper 12 dienen dazu den Gleit- beziehungsweise Rollwiderstand des drehenden, am Ventilsitz 2 beziehungsweise an der ringförmigen Auflagefläche 2c anliegenden Schliesselementes 3 zu reduzieren. Die Rollkörper 12 sind vorzugsweise zylinderförmig oder kugelförmig ausgestaltet und bestehen vorzugsweise aus Metall oder Keramik.

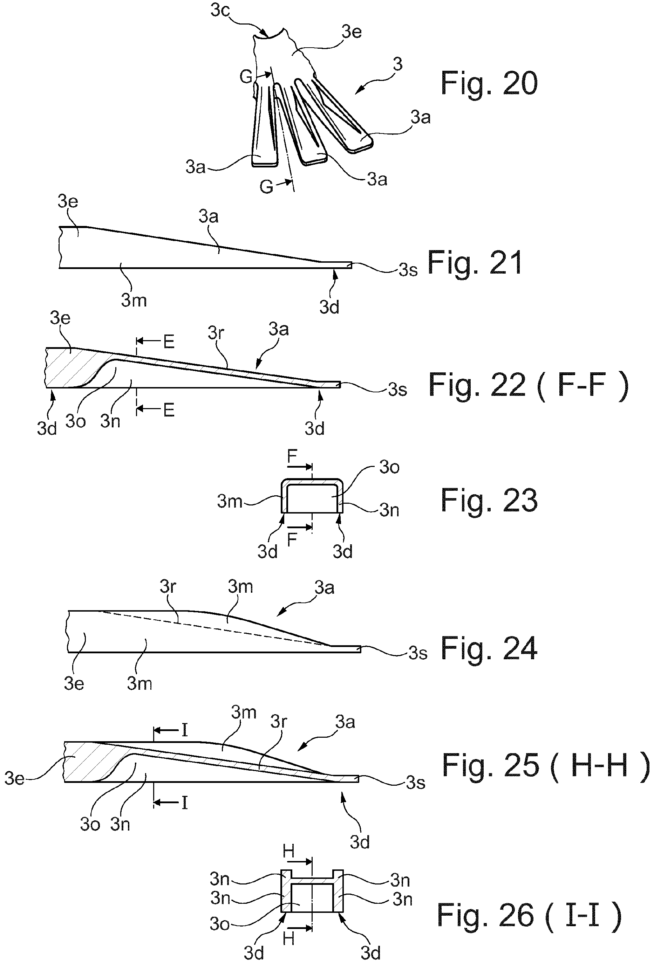

Figur 20 zeigt ausschnittweise ein weiteres Ausführungsbeispiel eines Schliesselementes 3 umfassend eine Nabe 3e mit Zentralbohrung 3c, und umfassend eine Mehrzahl von in Umfangsrichtung gegenseitig beabstandet angeordneten, mit der Nabe 3e verbunden, radialen Schliessteilen 3a. Figur 21 zeigt eine Seitenansicht eines einzigen Schliessteils 3a gemäss Figur 20 aus Blickrichtung G. Figur 22 zeigt eine Längsschnitt F-F des Schliessteils 3a, und Figur 23 zeigt einen Querschnitt des Schliessteils 3a entlang der Schnittlinie E-E. Das Schliessteil 3a umfasst eine erste sowie eine zweite radiale Seitenwand 3m, 3n sowie eine Deckfläche 3r, welche einen Innenraum 3o begrenzen. Die erste und die zweite radiale Seitenwand 3m, 3n verlaufen derart, dass diese wie in Figur 23 dargestellt zudem je eine zum Ventilsitz 2 hin ausgerichtete, ebene Dichtfläche 3d ausbilden. Diese beiden Dichtflächen 3d können, wie in Figur 22 dargestellt, zusammen mit der an der Nabe 3e angeordneten Dichtefläche 3d und der im Bereich der Peripherie 3s des Schliessteils 3a angeordneten Dichtefläche 3d an der Stirnseite 2b eines Ventilsitzes 2 anliegen, und, beispielswiese beim Ventilsitz 2 gemäss Figur 3, die Durchlassöffnungen 2a abdichten, indem die genannten Dichtflächen 3d an der Stirnseite 2b anliegen. In der abgesenkten Geschlossenstellung liegt das Schliesselement 3 am Ventilsitz 2 an, wobei das Schliesselement 3 derart bezüglich dem Ventilsitz 2 angeordnet ist, dass die Dichtflächen 3d an der Stirnseite 2b anliegen und die Durchlassöffnung 2a umschliessen, wobei der löffelförmige Innenraum 3o des Schliessteils 3a dabei über der Durchlassöffnung 2a liegt und mit dieser Fluid leitend verbunden. Das in den Figuren 20 bis 23 dargestellte Schliesselement 3 weist den Vorteil auf, dass die radialen Schliessteile 3a, insbesondere auf Grund der Seitenwände 3m, 3n, bei entsprechender Materialwahl eine hohe Steifigkeit aufweisen, und dass die radialen Schliessteile 3a andererseits sehr massenarm ausgestaltet sein können, was bei einer Rotation des Schliesselementes 3 um die Drehachse D den Vorteil ergibt, dass dieses eine reduzierte träge Masse aufweist. Dadurch ist zum Drehen des Schliesselementes 3 um die Drehachse D, genauer gesagt währen der Beschleunigungsphase und während der Abbremsphase, ein geringerer Kraftaufwand erforderlich, um das Schliesselement 3 von einer Offenstellung in eine Geschlossenstellung und umgekehrt von einer Geschlossenstellung in eine Offenstellung zu bringen.

Figur 24 zeigt eine Seitenansicht eines weiteren Ausführungsbeispiels eines einzigen Schliessteils 3a, wiederum aus Blickrichtung G. Figur 25 zeigt eine Längsschnitt des Schliessteils 3a gemäss Figur 24 entlang der Schnittlinie H-H und Figur 26 zeigt einen Querschnitt des Schliessteils 3a entlang der Schnittlinie I-I. Das Schliessteil 3a umfasst wiederum eine erste sowie eine zweite radiale Seitenwand 3m, 3n sowie eine Deckfläche 3r, wobei, im Unterschied zum Ausführungsbeispiel gemäss der Figuren 21 bis 23, die radialen Seitenwände 3m, 3n breiter ausgestaltet sind und über die Deckfläche 3r vorstehen, wie dies in den Figuren 24 bis 26 dargestellt ist. Diese in Verlaufsrichtung der Drehachse D breiteren Seitenwände 3m, 3n ergeben den Vorteil, dass das radiale Schliessteil 3a bei gleicher Wandstärke der Seitenwände 3m, 3n entweder eine höhere Stabilität beziehungsweise eine höhere Biegesteifigkeit aufweist, oder dass die Seitenwände 3m, 3n dünner ausgestaltet sind, und das Schliessteil 3a somit eine geringere Masse aufweist. Vorteilhafterweise sind alle Schliessteile 3a eines Schliesselementes 3 identisch ausgestaltet.

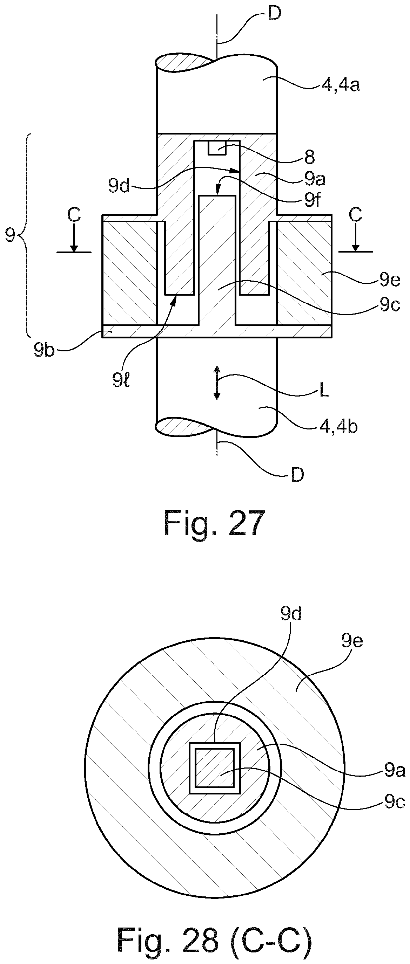

Figur 27 zeigt einen Längsschnitt durch ein weiteres Ausführungsbeispiel einer Kupplung 9, welche eine Alternative zu den Kupplung 9 gemäss der Figuren 10 und 11 ist. Figur 28 zeigt einen Schnitt der Kupplung gemäss Figur 27 entlang der Schnittlinie C-C. Wie bereits mit den Figuren 10 und 11 beschrieben weist auch die in den Figuren 27 und 28 dargestellte Kupplung 9 eine Beweglichkeit in Längsrichtung L auf, wogegen die Kupplung 9 bezüglich einer Drehung um die Drehachse D verdrehsteif ist. Die Kupplung 9 umfasst ein erstes Kupplungsteil 9a, welches fest mit dem ersten Wellenteil 4a verbunden ist, und umfasst ein zweites Kupplungsteil 9b, welches fest mit dem zweiten Wellenteil 4b verbunden ist. Das erste Kupplungsteil 9a umfasst eine eckige Ausnehmung 9d und das zweite Kupplungsteil 9b umfasst einen eckigen Fortsatz 9c, wobei die Ausnehmung 9d und der Fortsatz 9c derart gegenseitig angepasst ausgestaltet sind, dass ein gegenseitige Bewegung in Längsrichtung L möglich ist, wogegen ein gegenseitiges Verdrehen um die Drehachse D kaum oder gar nicht möglich ist. Das erste und zweite Kupplungsteil 9a, 9b sind über ein elastisches Federteil 9e, federelastisch miteinander verbunden, sodass das erste und zweite Kupplungsteil 9a, 9b in Längsrichtung L eine gegenseitige Bewegung ausführen können. Das Federteil 9e kann wie dargestellt hohlzylinderförmig ausgestaltet sein, und beispielsweise aus einem Kunststoff bestehen. In einer vorteilhaften Ausgestaltung ist wie dargestellt innerhalb der Kupplung 9 ein Sensor 8 angeordnet, der die Distanz beziehungsweise die Distanzveränderung zwischen den beiden Kupplungsteilen 9a, 9b misst, indem beispielsweise die Distanz zwischen Sensor 8 und Stirnseite 9f gemessen wird. In einer vorteilhaften Ausgestaltung weist die Kupplung 9 einen Anschlag 91 auf, welcher den maximalen Hubweg der Kupplung 9 begrenzt. Die Elastizität des Federteils 9e ist vorzugsweise derart gewählt, dass sich das Schliesselement 3 in Längsrichtung L selbsttätig bewegen kann.

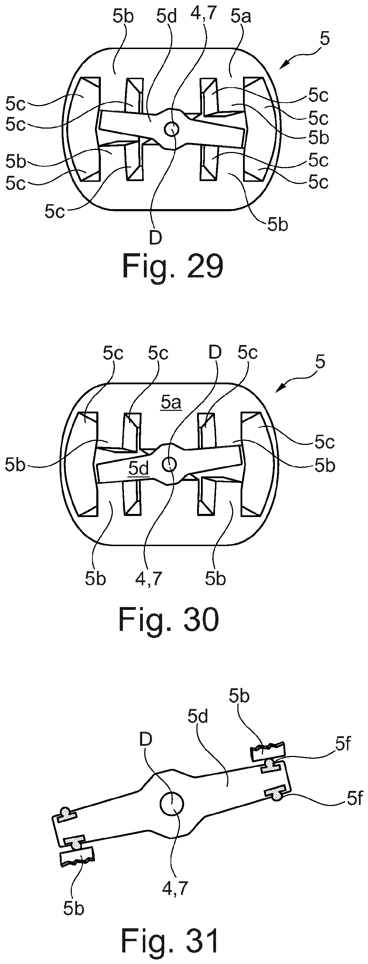

Figur 29 zeigt einen elektromagnetischen Antrieb 5 in einer ersten Grundstellung und Figur 30 denselben elektromagnetischen Antrieb 5 in einer zweiten Grundstellung. Der Antrieb 5 umfasst einen Stator 5a mit vier Jochen 5b sowie Innenräume 5c für Spulen. Die elektrisch leitenden Spulen zum Erzeugen des Magnetfeldes, welche um jedes der vier Joche 5b gewickelt sind und im Innenraum 5c verlaufen, sind nicht dargestellt. Der Antrieb 5 umfasst zudem einen Anker 5d, der mit der Welle 4 oder der Torsionsfeder 7 vorzugsweise fest verbunden ist, und der um die Drehachse D schwenkbar gelagert ist. Der Antrieb 5 ist derart ausgestaltet, dass der maximale Schwenkbereich des Ankers 5d geringfügig grösser ist als der zum Drehen des Schliesselementes 3 erforderliche Winkel. Abhängig von der konstruktiven Ausgestaltung weist der Antrieb 5 vorzugsweise einen Schwenkwinkel in einem Bereich von 5 ° bis 20°. Ein Drehen des Schliesselements 3 von der Offenstellung zur Geschlossenstellung um 7.2° bedeutet, dass die Offenstellung zusammen mit der Geschlossenstellung in Umfangsrichtung insgesamt einen Drehwinkel von insgesamt 14.4° beanspruchen, sodass der Ventilsitz 2 fünfundzwanzig in Umfangsrichtung gegenseitig gleichmässig beabstandete Durchlassöffnungen 2a aufweist, wie in Figur 3 dargestellt. Entsprechend müsste sich der Anker 5d des Antriebs 5 um einen leicht grösseren Winkel schwenken, beispielsweise um einen Winkel im Bereich von 8° bis 10°, insbesondere abhängig von der Verdrehsteifigkeit des ersten Wellenteils 4a. Der in Figur 3 dargestellte Ventilsitz 2 weist den Vorteil auf, dass von der Offenstellung zur Geschlossenstellung ein kleiner Drehwinkel erforderlich ist, was eine besonders Schnelles Umschalten beziehungsweise eine besonders kurz Schaltzeit ermöglicht. Der in den Figuren 29 bis 31 dargestellte Antrieb 5 ist geeignet das Schliesselement 5, wie in den Figuren 1, 2, 8 und 9 dargestellt, um einen Winkelbereich von beispielsweise 7.2° zu drehen, um das Schliesselement 5 anzutreiben und von der Offenstellung in die Geschlossenstellung oder umgekehrt zu drehen.

In einer besonders vorteilhaften Ausgestaltung sind, wie in Figur 31 dargestellt, an den Endabschnitten des Ankers 5d Dämpfelemente 5f angeordnet, deren Aufgabe es ist einen direkten Kontakt des Ankers 5d mit dem Joch 5b zu verhindern. Die Dämpfelemente 5f bestehen aus einem nichtmagnetischen Werkstoff, beispielsweise Aluminium oder einem Kunststoff. Diese Ausgestaltung weist den Vorteil auf, dass ein Kleben des Ankers 5d am Joch 5b verhindert wird, sodass sichergestellt ist, dass sich der Anker 5d sofort vom Joch 5b löst, wenn am Antrieb 5 ein entsprechendes Magnetfeld zum Umschalten des Ankers 5d angelegt wird. Das in den Figuren 1, 2, 8 und 9 dargestellte Kolbenkompressorventil 1 umfassend einen Antrieb 5 wie in den Figuren 29 bis 31 dargestellt, kann sehr schnell von einer Geschlossenstellung in eine Offenstellung und umgekehrt geschaltet werden, wobei die Schaltzeit weniger als 0,1 Sekunde beträgt, und besonders vorteilhaft im Bereich von etwa 2,5 Millisekunden liegt, oder im Bereich zwischen 2 bis 10 Millisekunden liegt.

Es ist nicht erforderlich den Drehwinkel des Schliesselementes 3 als Zustandsgrösse E des Schliesselementes 3 zu erfassen, da dieser Zustandsgrösse kein Hinweis über die Verschiebung des Schliesselementes 3 in Längsrichtung L zu entnehmen ist, und somit basierend auf dieser Zustandsgrösse nicht entschieden werden kann, zu welchem Zeitpunkt der Stellantrieb 5 zu aktivieren ist. Es kann sich jedoch zum sicheren Betrieb des Kolbenkompressorventils als vorteilhaft erweisen, zusätzlich auch den Drehwinkel des Schliesselementes 3 oder eine damit zusammenhängende Grösse, insbesondere den Drehwinkel des Stellantriebs 5 zu messen. Zudem ist des vorteilhaft den Kurbelwellenwinkel des Kompressors zu messen. Über den Kurbelwellenwinkel des Kompressors lässt sich bestimmen wann bzw. bei welchem Kurbelwellenwinkel das Kolbenkompressorventil geöffnet bzw. geschlossen sein muss, bzw. bei welchem Kurbelwellenwinkel der Gasausstoss bzw. das Gasansaugen des Kolbenkompressorventils stattfindet. Durch das Messen des Drehwinkels des Schliesselementes 3 können beispielsweise Fehlfunktionen des Schliesselementes 3 detektiert werden, und Fehlersignale generiert werden oder der Kolbenkompressor beispielsweise notfalls gestoppt werden, falls die Schliesselemente 3 nicht in einem durch den Kurbelwellenwinkel vorgegeben Zyklus durch Drehen des Schliesselementes 3 geöffnet und geschlossen werden.

## Patentansprüche

1. Ventilverschluss (1a) für ein Kolbenkompressorventil (1), umfassend einen Ventilsitz (2) mit einer Mehrzahl von Durchlassöffnungen (2a), umfassend eine Welle (4) mit Drehachse (D), sowie umfassend ein um die Drehachse (D) der Welle (4) drehbares Schliesselement (3) zum Öffnen und Schliessen der Durchlassöffnungen (2a), wobei das Schliesselement (3) fest mit der Welle (4) verbunden ist, wobei der Ventilsitz (2) eine ebene Stirnseite (2b) umfasst, in welche die Durchlassöffnungen (2a) münden, wobei der Ventilsitz (2) ein Zentrum (Z) aufweist, und wobei die Durchlassöffnungen (2a) radial zum Zentrum (Z) verlaufen, wobei das Schliesselement (3) einen Mittelpunkt (M) aufweist sowie eine Mehrzahl von radial zum Mittelpunkt (M) verlaufende Schliessarme (3a), wobei die Welle (4) derart im Ventilsitz (2) gelagert ist, dass die Welle (4) sowohl um die Drehachse (D) drehbar als auch in Verlaufsrichtung (L) der Drehachse (D) verschiebbar angeordnet ist, wobei die Drehachse (D) senkrecht zur Stirnseite (2b) sowie durch das Zentrum (Z) verläuft, wobei jeder Schliessarm (3a) eine zur Stirnseite (2b) hin ausgerichtete Dichtfläche (3d) aufweist, und wobei die Schliessarme (3a) im Wesentlichen komplementär zu den Durchlassöffnungen (2a) ausgebildet sind, um in Abhängigkeit der Drehung des Schliesselements (3) die Durchlassöffnungen (2a) mit den Dichtflächen (3d) zu schliessen oder zu öffnen.

2. Ventilverschluss nach Anspruch 1, **dadurch gekennzeichnet, dass** die Welle (4) derart in Längsrichtung (L) der Drehachse (D) verschiebbar ausgestaltet ist, dass das Schliesselement (3) bei entsprechend anliegender Druckdifferenz in Längsrichtung (L) selbsttätig verschiebbar ist, und insbesondere selbsttätig vom Ventilsitz abhebbar ist.

3. Ventilverschluss nach Anspruch 1 oder 2, **dadurch gekennzeichnet, dass** die Schliessarme (3a) derart ausgestaltet sind, dass diese zu deren Peripherie (3s) hin eine abnehmende Querschnittsfläche aufweisen.

4. Ventilverschluss nach einem der Ansprüche 1 bis 3, **dadurch gekennzeichnet, dass** das Schliesselement (3) eine Nabe (3e) umfasst, welche symmetrisch zur Drehachse (D) angeordnet ist, und dass die Schliessarme (3a) ausgehend von der Nabe (3e) in radialer Richtung verlaufen, und dass die Stirnseite (2b) des Ventilsitzes (2) in bezüglich des Zentrums (Z) radialer Richtung in einem ersten Teilabschnitt eine ringförmige Auflagefläche (2c) aufweist, und in radialer Richtung nachfolgend in einem zweiten Teilabschnitt die Durchlassöffnungen (2a) aufweist.

5. Ventilverschluss nach einem der Ansprüche 1 bis 4, **dadurch gekennzeichnet, dass** zumindest zwanzig Durchlassöffnungen (2a) in Umfangsrichtung zur Drehachse (D) gegenseitig regelmässig beanstandet angeordnet sind, und dass dieselbe Anzahl Schliessarme (3a) in Umfangsrichtung zur Drehachse (D) gegenseitig regelmässig beanstandet angeordnet sind.

6. Ventilverschluss nach einem der Ansprüche 3 bis 5, **dadurch gekennzeichnet, dass** die Schliessarme (3a) in Verlaufsrichtung der Drehachse (D) eine Höhe (3t) aufweisen, und dass die Höhe (3t) der Schliessarme (3a) zur Peripherie (3s) hin abnimmt.

7. Ventilverschluss nach einem der Ansprüche 3 bis 6, **dadurch gekennzeichnet, dass** jeder Schliessarm (3a) in Umfangsrichtung zur Drehachse (D) eine konstante Höhe (3t) aufweist.

8. Ventilverschluss nach einem der Ansprüche 1 bis 7, **dadurch gekennzeichnet, dass** jeder Schliessarm (3a) aus einem plattenförmigen Teil (3w) und einer damit fest verbunden Rippe (3i) besteht, dass jedes plattenförmige Teile (3w) sich in radialer Richtung bis zur Peripherie (3s) erstreckt, dass jede Rippe (3i) auf der zur Durchlassöffnung (2a) abgewandte Seite in Richtung der Drehachse (D) über das plattenförmige Teil (3w) vorsteht, und dass die Rippe (3i) zur Peripherie (3s) hin eine abnehmende Höhe (3t) aufweist.

9. Ventilverschluss nach einem der Ansprüche 1 bis 7, **dadurch gekennzeichnet, dass** jeder Schliessarm (3a) eine erste radiale Seitenwand (3m) und eine in Umfangsrichtung beabstandete zweite radiale Seitenwand (3n) umfasst, dass die zur Stirnseite (2b) ausgerichtet Seite der ersten und zweiten Seitenwand (3m, 3n) Teil der Dichtefläche (3d) des Schliessarms (3a) bilden, dass die Höhe (3t) der erste und zweiten radialen Seitenwand (3m, 3n) zur Peripherie (3s) hin abnimmt, dass eine in Umfangsrichtung verlaufende Deckfläche (3r) die erste radiale Seitenwand (3m) mit der zweiten radialen Seitenwand (3n) Fluid dicht verbinden, wobei die Deckfläche (3r) in Richtung der Drehachse (D) beabstandet zur Dichtefläche (3d) angeordnet ist, sodass der Schliessarm (3a) einen Innenhohlraum (3o) aufweist, der zur Stirnseite (2b) hin durch eine umlaufende Dichtefläche (3d) begrenzt ist.

10. Ventilverschluss nach Anspruch 9, **dadurch gekennzeichnet, dass** die erste und die zweite radiale Seitenwand (3m, 3n) in Richtung der Drehachse (D) über die Deckfläche (3r) vorstehen.

11. Ventilverschluss nach einem der vorhergehenden Ansprüche, **dadurch gekennzeichnet, dass** der Schliessarm (3a) zu dessen Peripherie (3s) hin eine abnehmende Biegesteifigkeit aufweist.

12. Ventilverschluss nach einem der Ansprüche 4 bis 11, **dadurch gekennzeichnet, dass** die Nabe (3e) zur Stirnseite (2b) hin eine konzentrisch zur Drehachse (D) verlaufende, ebene Gleitfläche (3f) aufweist, welche angepasst zur ringförmigen Auflagefläche (2c) ausgestaltet ist, sodass die ebene Gleitfläche (3f) auf der ringförmigen Auflagefläche (2c) gleiten kann.

13. Ventilverschluss nach einem der Ansprüche 4 bis 12, **dadurch gekennzeichnet, dass** die ringförmigen Auflagefläche (2c) in Richtung der Drehachse (D) vorstehende Stützelemente (2d) und die Gleitfläche (3f) gegengleich zu den Stützelementen (2d) angeordnete Vertiefungen (3n) aufweist, oder dass die Gleitfläche (3f) in Richtung der Drehachse (D) vorstehende Stützelemente (2d) und die ringförmigen Auflagefläche (2c) gegengleich zu den Stützelementen (2d) angeordnete Vertiefungen (3n) aufweist, wobei die Vertiefungen (3n) derart angeordnet sind, dass die Stützelemente (2d) nur in einer Drehstellung des Schliesselements (3), bei welcher die Durchlassöffnungen (2a) im Wesentlichen geschlossen sind, in der Vertiefung (3n) liegen, und dass die Stützelemente (2d) und die Vertiefung (3n) bei sonstigen Drehstellungen des Schliesselements (3) gegenseitig in Umfangsrichtung versetzt angeordnet sind.

14. Ventilverschluss nach einem der Ansprüche 4 bis 13, **dadurch gekennzeichnet, dass** in der ringförmigen Auflagefläche (2c) in Richtung der Drehachse (D) vorstehende Rollkörper (12) angeordnet sind, welche zumindest in Umfangsrichtung zur Drehachse (D) rotierbar sind.

15. Ventilverschluss nach einem der vorhergehenden Ansprüche, **dadurch gekennzeichnet, dass** alle Schliessarme (3a) zum Ventilsitz (2) hin eine gekrümmte Dichtfläche (3d) aufweisen, wobei die Dichtfläche (3d), ausgehend vom Zentrum (Z), in radialer Richtung in einem ersten Teilabschnitt (3u) eben verläuft, und anschliessen in radialer Richtung zur Peripherie (3s) hin entlang eines zweiten Teilabschnittes (3v) gekrümmt verläuft.

16. Verfahren zum Betrieb eines Ventilverschlusses (1a) eines Kolbenkompressorventils (1), wobei der Ventilverschluss (1a) einen Ventilsitz (2) mit einer Mehrzahl von Durchlassöffnungen (2a), ein Schliesselement (3) sowie eine Welle (4) mit einer Drehachse (D) umfasst, wobei das Schiesselement (3) zum Öffnen und Schliessen der Durchlassöffnungen (2a) um die Drehachse (D) gedreht wird, **dadurch gekennzeichnet, dass** das Schliesselement (3) einteilig ausgestaltet ist und mit der Welle (4) fest verbunden ist, dass die Welle (4) sowohl um die Drehachse (D) drehbar als auch in Richtung der Drehachse (D) verschiebbar im Ventilsitz (2) gelagert ist, dass das Schliesselement (3) auf Grund eines am Kolbenkompressorventil (1) anliegenden Fluiddrucks selbsttätig in Richtung der Drehachse (D) angehoben wird, und dass das Schliesselement (3) nach dem Abheben vom Ventilsitz (2) durch die Welle (4) aktiv angetrieben gedreht wird und somit die Durchlassöffnungen (2a) vollständig geöffnet werden.

17. Verfahren nach Anspruch 16, **dadurch gekennzeichnet, dass** zum Öffnen des Ventilverschlusses (1a) in einem ersten Verfahrensschritt das Schliesselement (3) vom Ventilsitz (2) angehoben wird, und dass das Schliesselement (3) nach dem Abheben in einem zweiten Verfahrensschritt in eine Offenstellung gedreht wird.

18. Verfahren nach Anspruch 16 oder 17, **dadurch gekennzeichnet, dass** die Lage des Schliesselements (3) bezüglich des Ventilsitzes (2) gemessen wird, und dass das Schliesselement (3) erst nach erfolgtem Abheben vom Ventilsitz (2) um die Drehachse (D) gedreht wird.

19. Verfahren nach Anspruch 17 oder 18, **dadurch gekennzeichnet, dass** das Schliesselement (3) innerhalb eines Zeitraums von 2 Millisekunden bis 10 Millisekunden nach dem Abheben vom Ventilsitz (2) in die Offenstellung gedreht wird.

## Claims

1. A valve closure (1a) for a piston compressor valve (1), comprising a valve seat (2) having a plurality of passage openings (2a), comprising a shaft (4) having a rotation axis (D), and comprising a closing element (3) for opening and closing the passage openings (2a) which is rotatable about the rotation axis (D) of the shaft (4), wherein the valve seat (2) comprises a planar end side (2b) into which the passage openings (2a) open, wherein the valve seat (2) has a center (Z), and wherein the passage openings (2a) run radially to the center (Z), wherein the rotation axis (D) runs perpendicular to the end side (2b) and through the center (Z),
**characterized in that** the closing element (3) is designed in one piece, that the closing element (3) is fixedly connected to the shaft (4), that the closing element (3) has a center point (M) and a plurality of closing arms (3a) that run radially to the center point (M), that the shaft (4) is mounted in the valve seat (2) in such a manner that the shaft (4) is rotatable about the rotation axis (D) as well as displaceable in the profile direction (L) of the rotation axis (D), that each closing arm (3a) has a sealing face (3d) that is aligned toward the end side (2b), and that the closing arms (3a) are configured so as to be substantially complementary to the passage openings (2a) as a function of the rotation of the closing element (3) which closes or opens the passage openings (2a) by way of the sealing faces (3d).

2. The valve closure as claimed in claim 1, **characterized in that** the shaft (4) is designed to be displaceable in the longitudinal direction (L) of the rotation axis (D) in such a manner that the closing element (3) in the event of a corresponding prevalent pressure differential is displaceable in a self-acting manner in the longitudinal direction (L) and is in particular capable of being lifted in a self-acting manner from the valve seat.

3. The valve closure as claimed in claim 1 or 2, **characterized in that** the closing arms (3a) are designed in such a manner that said closing arms (3a) have a cross-sectional face that decreases toward the periphery (35) of said closing arms (3a).

4. The valve closure as claimed in one of claims 1 to 3, **characterized in that** the closing element (3) comprises a hub (3e) which is disposed so as to be symmetrical to the rotation axis (D), and **in that** the closing arms (3a), proceeding from the hub (3e), run in the radial direction, and **in that** the end side (2b) of the valve seat (2) in the radial direction in terms of the center (Z) in a first sub-portion has an annular bearing face (2c) and, following thereon in the radial direction, in a second sub-portion has the passage openings (2a).

5. The valve closure as claimed in one of claims 1 to 4, **characterized in that** at least twenty passage openings (2a) are disposed to be mutually spaced apart uniformly in the circumferential direction to the rotation axis (D), and **in that** the same number of closing arms (3a) are disposed so as to be mutually spaced apart uniformly in the circumferential direction to the rotation axis (D).

6. The valve closure as claimed in one of claims 3 to 5, **characterized in that** the closing arms (3a) in the profile direction of the rotation axis (D) have a height (3t), and **in that** the height (3t) of the closing arms (3a) decreases toward the periphery (3s).

7. The valve closure as claimed in one of claims 3 to 6, **characterized in that** each closing arm (3a) in the circumferential direction to the rotation axis (D) has a consistent height (3t).

8. The valve closure as claimed in one of claims 1 to 7, **characterized in that** each closing arm (3a) is composed of a plate-shaped part (3w) and a rib (3i) that is fixedly connected thereto, **in that** each plate-shaped part (3w) in the radial direction extends up to the periphery (3s), **in that** each rib (3i) on the side that faces away from the passage opening (2a) projects beyond the plate-shaped part (3w) in the direction of the rotation axis (D), and **in that** the rib (3t) has a height (3t) that decreases toward the periphery (3s).

9. The valve closure as claimed in one of claims 1 to 7, **characterized in that** each closing arm (3a) comprises a first radial lateral wall (3m) and a second radial lateral wall (3n) that is spaced apart in the circumferential direction, **in that** the sides of the first and of the second lateral wall (3m, 3n) that is aligned toward the end side (2b) form part of the sealing face (3d) of the closing arm (3a), **in that** the height (3t) of the first and of the second radial lateral wall (3m, 3n) decreases toward the periphery (3s), **in that** a cover face (3r) that runs in the circumferential direction connects the first radial lateral wall (3m) to the second radial lateral wall (3n) in a fluid-tight manner, wherein the cover face (3r) is disposed so as to be spaced apart from the sealing face (3d) in the direction of the rotation axis (D) such that the closing arm (3a) has an internal cavity (3o) which toward the end side (2b) is delimited by an encircling sealing face (3d).

10. The valve closure as claimed in claim 9, **characterized in that** the first and the second lateral wall (3m, 3n) project beyond the cover face (3r) in the direction of the rotation axis (D).

11. The valve closure as claimed in one of the preceding claims, wherein the closing arm (3a) toward the periphery (3s) thereof has a decreasing flexural rigidity.

12. The valve closure as claimed in one of claims 4 to 11, **characterized in that** the hub (3e) toward the end side (2b) has a planar friction face (3f) which runs so as to be concentric with the rotation axis (D) and is adapted to the annular bearing face (2c) such that the planar friction face (3f) can slide on the annular bearing face (2c).

13. The valve closure as claimed in one of claims 4 to 12, **characterized in that** the annular bearing face (2c) has support elements (2d) that project in the direction of the rotation axis (D), and the friction face (3f) has depressions (3n) that are disposed in a reciprocal manner to the support elements (2d), or **in that** the friction face (3f) has support elements (2d) that project in the direction of the rotation axis (D), and the annular bearing face (2c) has depressions (3n) that are disposed in a reciprocal manner to the support elements (2d), wherein the depressions (3n) are disposed in such a manner that the support elements (2d) lie in the depression (3n) only in a rotary position of the closing element (3) in which the passage openings (2a) are substantially closed, and **in that** the support elements (2d) and the depression (3n) in other rotary positions of the closing element (3) are disposed so as to be mutually offset in the circumferential direction.

14. The valve closure as claimed in one of claims 4 to 13, **characterized in that** rolling members (12) which project in the direction of the rotation axis (D) and are rotatable at least in the circumferential direction to the rotation axis (D) are disposed in the annular bearing face (2c).

15. The valve closure as claimed in one of the preceding claims, **characterized in that** all closing arms (3a) toward the valve seat (2) have a curved sealing face (3d), wherein the sealing face (3d), proceeding from the center (Z), in a first sub-portion in the radial direction runs in a planar manner, and subsequently in the radial direction toward the periphery (3s) runs so as to be curved along a second sub-portion.

16. A method for operating a valve closure (1a) of a piston compressor valve (1), wherein the valve closure (1a) comprises a valve seat (2) having a plurality of passage openings (2a), a closing element (3) and a shaft (4) having a rotation axis (D), wherein the closing element (3) for opening and closing the passage openings (2a) is rotated about the rotation axis (D), **characterized in that** the closing element (3) is formed in one piece and is fixedly connected to the shaft (4), that the shaft (4) is seated in the valve seat (2) so as to be rotatable about the rotation axis (D) and so as to be displaceable in the direction of the rotation axis (D), that the closing element (3) by virtue of a fluid pressure prevalent on the piston compressor valve (1) is lifted in a self-acting manner in the direction of the rotation axis (D), and that the closing element (3) after lifting from the valve seat (2) is rotated in a manner actively driven by the shaft (4) and the passage openings (2a) are thus completely opened.

17. The method as claimed in claim 16, **characterized in that** in a first method step the closing element (3) for opening the valve closure (1a) is lifted from the valve seat (2), and **in that** in a second method step the closing element (3) after lifting is rotated to an open position.

18. The method as claimed in claim 16 or 17, **characterized in that** the position of the closing element (3) in relation to the valve seat (2) is measured, and **in that** the closing element (3) is rotated about the rotation axis (D) only upon having been lifted from the valve seat (2).

19. The method as claimed in claims 17 or 18, **characterized in that** the closing element (3) is rotated to the open position within a duration of 2 milliseconds to 10 milliseconds upon having been lifted from the valve seat (2).

## Revendications

1. Fermeture de soupape (1a) pour une soupape de compresseur à piston (1), comprenant un siège de soupape (2) avec une pluralité d'ouvertures de passage (2a), comprenant un arbre (4) avec un axe de rotation (D), et comprenant également un élément de fermeture (3) pouvant tourner autour de l'axe de rotation (D) de l'arbre (4) pour ouvrir et fermer les ouvertures de passage (2a), l'élément de fermeture (3) étant connecté fixement à l'arbre (4), le siège de soupape (2) comprenant un côté frontal plan (2b), dans lequel débouchent les ouvertures de passage (2a), le siège de soupape (2) présentant un centre (Z), et les ouvertures de passage (2a) s'étendant radialement vers le centre (Z), l'élément de fermeture (3) présentant un centre (M) ainsi qu'une pluralité de bras de fermeture (3a) s'étendant radialement vers le centre (M), l'arbre (4) étant supporté dans le siège de soupape (2) de telle sorte que l'arbre (4) soit disposé à la fois de manière à pouvoir tourner autour de l'axe de rotation (D) et de manière à pouvoir être déplacé dans la direction d'étendue (L) de l'axe de rotation (D), l'axe de rotation (D) s'étendant perpendiculairement au côté frontal (2b) ainsi qu'à travers le centre (Z), chaque bras de fermeture (3a) présentant une surface d'étanchéité (3d) orientée vers le côté frontal (2b), et les bras de fermeture (3a) étant réalisés essentiellement de manière complémentaire aux ouvertures de passage (2a), afin de fermer ou d'ouvrir les ouvertures de passage (2a) avec les surfaces d'étanchéité (3d) en fonction de la rotation de l'élément de fermeture (3).

2. Fermeture de soupape selon la revendication 1, **caractérisée en ce que** l'arbre (4) est configuré de manière à pouvoir être déplacé dans la direction longitudinale (L) de l'axe de rotation (D), de telle sorte que l'élément de fermeture (3), dans le cas d'une différence de pression correspondante s'appliquant dans la direction longitudinale (L), puisse être déplacé automatiquement et notamment puisse être soulevé automatiquement du siège de soupape.

3. Fermeture de soupape selon la revendication 1 ou 2, **caractérisée en ce que** les bras de fermeture (3a) sont configurés de telle sorte qu'ils présentent une surface de section transversale diminuant vers leur périphérie (3s).

4. Fermeture de soupape selon l'une quelconque des revendications 1 à 3, **caractérisée en ce que** l'élément de fermeture (3) comprend un moyeu (3e) qui est disposé symétriquement par rapport à l'axe de rotation (D), et **en ce que** les bras de fermeture (3a) s'étendent à partir du moyeu (3e) dans la direction radiale, et **en ce que** le côté frontal (2b) du siège de soupape (2) présente, dans la direction radiale par rapport au centre (Z), dans une première portion partielle, une surface d'appui annulaire (2c), et ensuite, dans la direction radiale, dans une deuxième portion partielle, présente les ouvertures de passage (2a).

5. Fermeture de soupape selon l'une quelconque des revendications 1 à 4, **caractérisée en ce qu'**au moins vingt ouvertures de passage (2a) sont disposées de manière espacée régulièrement les unes des autres dans la direction périphérique par rapport à l'axe de rotation (D), et **en ce que** le même nombre de bras de fermeture (3a) sont disposés de manière espacée régulièrement les uns des autres dans la direction périphérique par rapport à l'axe de rotation (D).

6. Fermeture de soupape selon l'une quelconque des revendications 3 à 5, **caractérisée en ce que** les bras de fermeture (3a) présentent dans la direction d'étendue de l'axe de rotation (D) une hauteur (3t), et **en ce que** la hauteur (3t) des bras de fermeture (3a) diminue vers la périphérie (3s).

7. Fermeture de soupape selon l'une quelconque des revendications 3 à 6, **caractérisée en ce que** chaque bras de fermeture (3a) présente, dans la direction périphérique par rapport à l'axe de rotation (D), une hauteur constante (3t).

8. Fermeture de soupape selon l'une quelconque des revendications 1 à 7, **caractérisée en ce que** chaque bras de fermeture (3a) se compose d'une partie en forme de plaque (3w) et d'une nervure (3i) connectée fixement à celle-ci, **en ce que** chaque partie en forme de plaque (3w) s'étend dans la direction radiale jusqu'à la périphérie (3s), **en ce que** chaque nervure (3i) fait saillie du côté opposé à l'ouverture de passage (2a) dans la direction de l'axe de rotation (D) au-delà de la partie en forme de plaque (3w), et **en ce que** la nervure (3i) présente une hauteur (3t) diminuant vers la périphérie (3s).

9. Fermeture de soupape selon l'une quelconque des revendications 1 à 7, **caractérisée en ce que** chaque bras de fermeture (3a) présente une première paroi latérale radiale (3m) et une deuxième paroi latérale radiale (3n) espacée dans la direction périphérique, **en ce que** les côtés orientés vers le côté frontal (2b) de la première et de la deuxième paroi latérale (3m, 3n) forment une partie de la surface d'étanchéité (3d) du bras de fermeture (3a), **en ce que** la hauteur (3t) de la première et de la deuxième paroi latérale radiale (3m, 3n) diminue vers la périphérie (3s), **en ce qu'**une surface de recouvrement (3r) s'étendant la direction périphérique relie de manière étanche aux fluides la première paroi latérale radiale (3m) à la deuxième paroi latérale radiale (3n), la surface de recouvrement (3r) étant disposée dans la direction de l'axe de rotation (D) à distance de la surface d'étanchéité (3d), de telle sorte que le bras de fermeture (3a) présente une cavité intérieure (3o) qui est limitée vers le côté frontal (2b) par une surface d'étanchéité périphérique (3d).

10. Fermeture de soupape selon la revendication 9, **caractérisée en ce que** la première et la deuxième paroi latérale radiale (3m, 3n) font saillie au-delà de la surface de recouvrement (3r) dans la direction de l'axe de rotation (D).

11. Fermeture de soupape selon l'une quelconque des revendications précédentes, **caractérisée en ce que** le bras de fermeture (3a) présente, vers sa périphérie (3s), une rigidité en flexion qui diminue.

12. Fermeture de soupape selon l'une quelconque des revendications 4 à 11, **caractérisée en ce que** le moyeu (3e) présente, vers le côté frontal (2b), une surface de glissement plane (3f) s'étendant concentriquement par rapport à l'axe de rotation (D), laquelle est configurée de manière adaptée à la surface d'appui annulaire (2c) de telle sorte que la surface de glissement plane (3f) puisse glisser sur la surface d'appui annulaire (2c).

13. Fermeture de soupape selon l'une quelconque des revendications 4 à 12, **caractérisée en ce que** la surface d'appui annulaire (2c) présente des éléments de support (2d) faisant saillie dans la direction de l'axe de rotation (D), et la surface de glissement (3f) présente des renfoncements (3n) disposés de manière opposée aux éléments de support (2d), ou **en ce que** la surface de glissement (3f) présente des éléments de support (2d) faisant saillie dans la direction de l'axe de rotation (D) et la surface d'appui annulaire (2c) présente des renfoncements (3n) disposés à l'opposé des éléments de support (2d), les renfoncements (3n) étant disposés de telle sorte que les éléments de support (2d) soient situés dans le renfoncement (3n) seulement dans une position de rotation de l'élément de fermeture (3) dans laquelle les ouvertures de passage (2a) sont essentiellement fermées, et **en ce que** les éléments de support (2d) et le renfoncement (3n) sont disposés de manière décalée mutuellement dans la direction périphérique dans d'autres positions de rotation de l'élément de fermeture (3).

14. Fermeture de soupape selon l'une quelconque des revendications 4 à 13, **caractérisée en ce que** des corps de roulement (12) faisant saillie dans la direction de l'axe de rotation (D) sont disposés dans la surface d'appui annulaire (2c), lesquels peuvent être entraînés en rotation au moins dans la direction périphérique par rapport à l'axe de rotation (D).

15. Fermeture de soupape selon l'une quelconque des revendications précédentes, **caractérisée en ce que** tous les bras de fermeture (3a) présentent, vers le siège de soupape (2), une surface d'étanchéité courbe (3d), la surface d'étanchéité (3d) s'étendant à partir du centre (Z) sous forme plane dans la direction radiale dans une première portion partielle (3u) et s'étendant ensuite sous forme courbe dans la direction radiale vers la périphérie (3s) le long d'une deuxième portion partielle (3v).

16. Procédé de fonctionnement d'une fermeture de soupape (1a) d'une soupape de compresseur à piston (1), la fermeture de soupape (1a) comprenant un siège de soupape (2) avec une pluralité d'ouvertures de passage (2a), un élément de fermeture (3) et un arbre (4) avec un axe de rotation (D), l'élément de fermeture (3) étant tourné autour de l'axe de rotation (D) pour ouvrir et fermer les ouvertures de passage (2a), **caractérisé en ce que** l'élément de fermeture (3) est configuré d'une seule pièce et est connecté fixement à l'arbre (4), **en ce que** l'arbre (4) est supporté de manière à pouvoir tourner autour de l'axe de rotation (D) et également de manière déplaçable dans le siège de soupape (2) dans la direction de l'axe de rotation (D), **en ce que** l'élément de fermeture (3) est soulevé automatiquement dans la direction de l'axe de rotation (D) sous l'effet d'une pression de fluide s'appliquant à la soupape de compresseur à piston (1), et **en ce que** l'élément de fermeture (3), après le soulèvement du siège de soupape (2), est tourné de manière entraînée activement par l'arbre (4) et de ce fait les ouvertures de passage (2a) sont complètement ouvertes.

17. Procédé selon la revendication 16, **caractérisé en ce que** pour l'ouverture de la fermeture de soupape (1a), dans une première étape de procédé, l'élément de fermeture (3) est soulevé du siège de soupape (2), et **en ce que** l'élément de fermeture (3), après le soulèvement, dans une deuxième étape de procédé, est tourné dans une position d'ouverture.

18. Procédé selon la revendication 16 ou 17, **caractérisé en ce que** la position de l'élément de fermeture (3) par rapport au siège de soupape (2) est mesurée, et **en ce que** l'élément de fermeture (3) est tourné autour de l'axe de rotation (D) seulement après le soulèvement effectif du siège de soupape (2).

19. Procédé selon la revendication 17 ou 18, **caractérisé en ce que** l'élément de fermeture (3) est tourné dans la position d'ouverture dans un intervalle de temps de 2 ms à 10 ms après le soulèvement du siège de soupape (2).
